# EUROPÄISCHE PATENTSCHRIFT

(11) **EP 4 310 434 B1**
(45) Veröffentlichungstag und Bekanntmachung des Hinweises auf die Patenterteilung: **23.10.2024**
(21) Anmeldenummer: 22186064.6
(22) Anmeldetag: 20.07.2022
(51) Int. Cl.: F28F 27/00, G01B 11/06, G01B 11/16

(54) **WÄRMETAUSCHER MIT FASEROPTISCHEM SENSOR ZUR BESTIMMUNG EINER ROHRWANDDICKE EINES WÄRMEÜBERTRAGUNGSROHRES DES WÄRMETAUSCHERS UND VERFAHREN ZUM BETREIBEN EINES SOLCHEN WÄRMETAUSCHERS**
HEAT EXCHANGER WITH FIBRE OPTIC SENSOR FOR DETERMINING A THICKNESS OF A HEAT EXCHANGER TUBE OF THE HEAT EXCHANGER AND METHOD FOR OPERATING SUCH A HEAT EXCHANGER
ÉCHANGEUR DE CHALEUR POURVU DE CAPTEUR À FIBRE OPTIQUE DESTINÉ À LA DÉTERMINATION DE L'ÉPAISSEUR DE LA PAROI DE TUBE D'UN TUBE DE TRANSFERT DE CHALEUR DE L'ÉCHANGEUR DE CHALEUR ET PROCÉDÉ PERMETTANT DE FAIRE FONCTIONNER UN TEL ÉCHANGEUR DE CHALEUR

(43) Veröffentlichungstag der Anmeldung: 24.01.2024
(73) Patentinhaber: Schoeller-Bleckmann Nitec GmbH, 2630 Ternitz (AT)
(72) Erfinder: Djinovic, Zoran, 2700 Wiener Neustadt (AT); Prohaska, Manuel, 8793 Trofaiach (AT); Gavrilovic-Wohlmuther, Aleksandra, 2823 Pitten (AT)
(74) Vertreter: Wirnsberger & Lerchbaum Patentanwälte OG

(56) Entgegenhaltungen:
- EP-A1- 3 569 305
- DE-A1- 102013 008 004
- US-A- 5 301 001
- US-A1- 2020 388 410

## Beschreibung

Die Erfindung betrifft einen Wärmetauscher, insbesondere Hochdruckwärmetauscher zur Harnstoffsynthese, aufweisend mehrere Wärmeübertragungsrohre zum Transport eines ersten Fluids, um über die Wärmeübertragungsrohre Wärme zwischen dem ersten Fluid und einem zweiten Fluid zu übertragen. Insbesondere, betrifft die Erfindung einen Wärmetauscher nach dem Oberbegriff des Anspruchs 1. Solch ein Wärmetauscher ist aus EP 3 569 305 bekannt.

Weiter betrifft die Erfindung ein Verfahren zum Betreiben eines Wärmetauschers.

Aus dem Stand der Technik ist es bekannt, einen Wärmetauscher einzusetzen, um Wärmeenergie zwischen einem ersten Fluidstrom und einem zweiten Fluidstrom auszutauschen. Häufig weist der Wärmetauscher mehrere Wärmeübertragungsrohre zum Transport des ersten Fluidstroms auf, um über die Wärmeübertragungsrohre Wärme an einen die Wärmeübertragungsrohre umströmenden zweiten Fluidstrom zu übertragen oder von diesem aufzunehmen. Im Rahmen einer Harnstoffsynthese werden üblicherweise Wärmetauscher eingesetzt, bei welchen der erste bzw. zweite Fluidstrom einen hohen Druck, in der Regel von mehr als 30 bar, und eine hohe Temperatur, in der Regel von mehr als 80°C, aufweist. Dabei ist der Transport des ersten Fluidstroms durch die Wärmeübertragungsrohre häufig mit einer, insbesondere korrosiven und/oder erosiven, Abtragung von Rohrwandmaterial der Wärmeübertragungsrohre oder einer Bildung von Ablagerungen jeweils in einem Inneren der Wärmeübertragungsrohre verbunden, sodass sich eine Rohrwanddicke der Wärmeübertragungsrohre im Betrieb des Wärmetauschers ändert, in der Regel, verkleinert. Eine Beeinträchtigung einer Rohrwandintegrität der Wärmeübertragungsrohre kann problematisch für eine Sicherheit eines Betriebs des Wärmetauschers sein. Üblicherweise ist es deshalb erforderlich, basierend auf zeitlichen Wartungsintervallen den Wärmetauscher regelmäßig abzuschalten und Rohrwanddicken der Wärmeübertragungsrohre zu vermessen.

Hierzu ist es üblich in einem Nicht-Betriebszustand des Wärmetauschers eine Messsonde in das jeweilige Wärmeübertragungsrohr einzuführen, um einen Innenradius bzw. eine Rohrwanddicke des Wärmeübertragungsrohres zu bestimmen. Bekannt sind Messsonden, welche einen Ultraschallsensor, einen optischen Sensor oder einen Wirbelstromsensor aufweisen, um die Rohrwanddicke zu bestimmen.

Im Besonderen bei Wärmetauschern, welche mit Drücken von mehr als 30 bar und hohen Temperaturen von mehr als 80°C des ersten und/oder zweiten Fluidstroms arbeiten, ist eine derartige Unterbrechung des Betriebs zur Bestimmung von Rohrwanddicken der Wärmeübertragungsrohre in der Regel aufwendig bzw. mit hohen Kosten verbunden.

Hier setzt die Erfindung an. Aufgabe der Erfindung ist es, einen Wärmetauscher der eingangs genannten Art anzugeben, welcher eine optimierte Einsatzfähigkeit aufweist, insbesondere einen optimierten Betrieb ermöglicht.

Außerdem ist es ein Ziel der Erfindung, ein Verfahren zum Betreiben eines Wärmetauschers anzugeben, welches einen optimierten Einsatz bzw. Betrieb des Wärmetauschers ermöglicht.

Die Aufgabe wird erfindungsgemäß dadurch gelöst, dass bei einem Wärmetauscher der eingangs genannten Art, an einem oder mehreren der Wärmeübertragungsrohre jeweils ein faseroptischer Sensor angeordnet ist, wobei der faseroptische Sensor ausgebildet ist, während eines Betriebs des Wärmetauschers interferometrisch eine elastische Schwingung, insbesondere Eigenschwingung, des jeweiligen Wärmeübertragungsrohres zu ermitteln, um während des Betriebs des Wärmetauschers eine Rohrwanddicke des jeweiligen Wärmeübertragungsrohres zu bestimmen.

Grundlage der Erfindung ist die Idee, eine Einsatzfähigkeit von Wärmetauschern, insbesondere von Wärmetauschern, welche für einen hohen Betriebsdruck und/oder eine hohe Betriebstemperatur des ersten und/oder des zweiten Fluids ausgebildet sind, zu verbessern, indem eine Rohrwanddicke von zumindest einem, vorzugsweise mehreren, Wärmeübertragungsrohren des Wärmetauschers während eines Betriebs des Wärmetauschers bestimmt wird. Dadurch kann ein Betrieb, insbesondere eine Prozessführung, und/oder eine Wartung des Wärmetauschers abhängig von der mit dem faseroptischen Sensor bestimmten Rohrwanddicke erfolgen. Im Besonderen ist es nicht erforderlich, einen Betrieb des Wärmetauschers zu unterbrechen, um die Rohrwanddicke zu bestimmen. Dies kann praktikabel erreicht werden, wenn, insbesondere wie dargelegt, an einem oder mehreren der Wärmeübertragungsrohre jeweils ein faseroptischer Sensor angeordnet ist. Praktikabel kann mit dem jeweiligen faseroptischen Sensor eine Rohrwanddicke einer Rohrwand des jeweiligen Wärmeübertragungsrohres während eines Betriebs des Wärmetauschers bestimmt werden, indem mit dem faseroptischen Sensor interferometrisch eine elastische Schwingung, insbesondere Frequenz der elastischen Schwingung, des jeweiligen Wärmeübertragungsrohres ermittelt wird. Die elastische Schwingung ist üblicherweise eine elastische Eigenschwingung bzw. die Frequenz eine Eigenfrequenz des Wärmeübertragungsrohres. Zweckmäßig können mit dem faseroptischen Sensor mehrere elastische Eigenschwingungen bzw. Eigenfrequenzen des jeweiligen Wärmeübertragungsrohres zur Bestimmung der Rohrwanddicke ermittelt werden.

Betrieb des Wärmetauschers bezeichnet einen Zustand, in dem das erste Fluid durch die Wärmeübertragungsrohre geleitet wird, um Wärme mit dem zweiten Fluid über die Wärmeübertragungsrohre auszutauschen. Ein hoher Betriebsdruck bzw. eine hohe Betriebstemperatur bezeichnet einen Betriebsdruck des ersten Fluids und/oder des zweiten Fluids größer als 30 bar bzw. eine Betriebstemperatur des ersten Fluids und/oder zweiten Fluids größer als 80°C. Im Besonderen ist der Betriebsdruck zwischen 30 bar und 200 bar, vorzugsweise etwa 180 bar, und/oder die Betriebstemperatur zwischen 80°C und 300°C, vorzugsweise etwa 230°C. In der Regel weist das erste und/oder zweite Fluid im Betrieb des Wärmetauschers einen solchen Betriebsdruck bzw. eine solche Betriebstemperatur auf bzw. ist der Wärmetauscher für einen solchen Betrieb ausgebildet. Entsprechend ist es günstig, wenn der jeweilige faseroptische Sensor für einen Einsatz bzw. eine Messung bei einem Einsatzdruck bzw. einer Einsatztemperatur entsprechend dem Betriebsdruck bzw. der Betriebstemperatur ausgebildet ist. Der Wärmetauscher ist vorzugsweise ein Hochdruckwärmetauscher. Bevorzugt ist der Wärmetauscher bzw. faseroptische Sensor zur In-situ-Bestimmung und In-operando-Bestimmung einer Rohrwanddicke des jeweiligen Wärmeübertragungsrohres ausgebildet bzw. wird eine Rohrwanddicke des jeweiligen Wärmeübertragungsrohres in situ und in operando mit dem faseroptischen Sensor bestimmt.

Besonders günstig ist es, wenn der Wärmetauscher ein Stripper zur Durchführung einer Strippung ist. Günstig ist es, wenn der Stripper zur Harnstoffsynthese eingesetzt wird. Der Stripper kann ausgebildet sein, um, in der Regel innerhalb der Wärmeübertragungsrohre, mit Strippung Harnstoff zu synthetisieren.

Vorteilhaft ist es, wenn der faseroptische Sensor eine optische Messfaser, welche eine optische Messstrecke bildet, und eine optische Referenzfaser, welche eine optische Referenzstrecke bildet, aufweist, wobei die Messfaser schwingungsübertragend mit dem Wärmeübertragungsrohr verbunden, bevorzugt um das Wärmeübertragungsrohr gewickelt, ist, um mit einem Detektor des faseroptischen Sensors ein mit einer entlang der Messstrecke geführten elektromagnetischen Welle und einer entlang der Referenzstrecke geführten elektromagnetischen Welle gebildetes Interferenzsignal zu detektieren. Damit kann die elastische Schwingung des Wärmeübertragungsrohres praktikabel ermittelt werden. Eine Umsetzung der Messstrecke und der Referenzstrecke mit optischen Fasern ermöglicht eine hohe Robustheit der Messung, wie dies üblicherweise bei Einsatzbedingungen eines Wärmetauschers, insbesondere Hochdruckwärmetauschers, erforderlich ist. Die optische Messfaser bzw. optische Referenzfaser sowie die optische Messstrecke bzw. optische Referenzstrecke wird in diesem Dokument, insbesondere im Folgenden, zur einfacheren Lesbarkeit, im Besonderen ohne Änderung deren Bedeutung, auch lediglich als Messfaser bzw. Referenzfaser sowie Messstrecke und Referenzstrecke bezeichnet.

Üblicherweise führt eine Änderung einer Masse, insbesondere eine Änderung einer Rohrwanddicke, des jeweiligen Wärmeübertragungsrohres zu einer Änderung einer elastischen Schwingung, insbesondere Eigenschwingung, des Wärmeübertragungsrohres. Mit einer Ermittlung bzw. Messung der elastischen Schwingung, insbesondere deren Frequenzen bzw. Eigenfrequenzen, kann eine Rohrwanddicke des Wärmeübertragungsrohres bestimmt werden. Vorgesehen ist üblicherweise, dass eine elastische Schwingung des Wärmeübertragungsrohres eine Änderung einer Länge der Messstrecke, insbesondere Messfaser, bewirkt. Zweckmäßig kann die Messfaser entsprechend mit dem Wärmeübertragungsrohr schwingungsübertragend, üblicherweise stoffschlüssig, verbunden sein, um dies zu erreichen. In der Regel ist die Messfaser derart mit dem jeweiligen Wärmeübertragungsrohr verbunden, dass eine mit der elastischen Schwingung des Wärmeübertragungsrohres verbundene Ausdehnung bzw. Kontraktion des Wärmeübertragungsrohres zu einer zur Schwingung des Wärmeübertragungsrohres korrespondierenden elastischen Ausdehnung und Entspannung, insbesondere Änderung einer Länge der Messfaser, führt. Die Referenzfaser ist in der Regel derart angeordnet, insbesondere mit dem jeweiligen Wärmeübertragungsrohr verbunden, dass eine Länge der Referenzfaser im Wesentlichen nicht von einer Änderung der Masse bzw. Änderung der elastischen Schwingung des Wärmetauscherrohres beeinflusst wird. Vorzugsweise sind die Referenzfaser und die Messfaser derart angeordnet, dass diese im Wesentlichen den gleichen Temperatureinflüssen und/oder Druckeinflüssen ausgesetzt sind. Die Messfaser und Referenzfaser, insbesondere deren jeweiliger Interaktionsabschnitt, sind üblicherweise am selben Wärmeübertragungsrohr angeordnet bzw. mit diesem verbunden. Üblicherweise wird eine über die Messfaser bzw. entlang der Messstrecke geleitete elektromagnetische Welle als Messwelle bezeichnet bzw. eine über die Referenzfaser bzw. entlang der Referenzstrecke geleitete elektromagnetische Welle als Referenzwelle bezeichnet. Verursacht durch eine elastische Schwingung des Wärmeübertragungsrohres können Messwelle und Referenzwelle einen Gangunterschied, insbesondere eine Phasendifferenz, aufweisen. Der Gangunterschied bzw. die Phasendifferenz ist dabei in der Regel abhängig von einer Frequenz, insbesondere Eigenfrequenz, der elastischen Schwingung des Wärmeübertragungsrohres. Vorgesehen ist üblicherweise, dass die Messfaser und Referenzfaser miteinander gekoppelt sind, um eine Messwelle und eine Referenzwelle zur Bildung eines Interferenzsignals miteinander in Interferenz zu bringen. Das Interferenzsignal, auch als elektromagnetische Interferenzwelle bezeichnet, ist üblicherweise abhängig vom Gangunterschied, insbesondere der Phasendifferenz, der elektromagnetischen Wellen, insbesondere der Messwelle und der Referenzwelle, sodass das Interferenzsignal zu einer elastischen Schwingung, insbesondere einer Frequenz bzw. Eigenfrequenz der elastischen Schwingung, des Wärmeübertragungsrohres korrespondiert. Die Phasendifferenz ist dabei in der Regel abhängig von einer Masse des Wärmeübertragungsrohres, wobei üblicherweise die Masse mit einer Eigenfrequenz bzw. Resonanzfrequenz der elastischen Schwingung des Wärmeübertragungsrohres korreliert. Es versteht sich, dass der faseroptische Sensor entsprechend ausgebildet sein kann. Die Messwelle und Referenzwelle sind üblicherweise kohärent zueinander ausgebildet, um nach Durchlaufen der Messstrecke bzw. Referenzstrecke durch Interferenz das Interferenzsignal zu bilden. Bewährt hat es sich, wenn die Messwelle und Referenzwelle von einer gemeinsamen elektromagnetischen Emissionsquelle stammen, um die Messwelle und Referenzwelle kohärent zueinander auszubilden.

Üblicherweise werden mit dem faseroptischen Sensor eine oder mehrere Frequenzen, insbesondere Eigenfrequenzen, auch als Resonanzfrequenzen bezeichnet, der elastischen Schwingung des Wärmeübertragungsrohres ermittelt. Die elastische Schwingung, insbesondere deren Frequenzen bzw. Eigenfrequenzen, des Wärmeübertragungsrohres korreliert in der Regel mit einer Rohrwanddicke des Wärmeübertragungsrohres, sodass durch Ermittlung bzw. Messung der elastischen Schwingung, insbesondere deren Frequenzen bzw. Eigenfrequenzen, die Rohrwanddicke des Wärmeübertragungsrohres bestimmt werden kann. In der Regel erhöht sich eine Frequenz, insbesondere Eigenfrequenz, mit Abnahme einer Rohrwanddicke des Wärmeübertragungsrohres. Im Besonderen hat sich gezeigt, dass häufig ein im Wesentlichen linearer Zusammenhang zwischen einer Frequenz, insbesondere Eigenfrequenz, der elastischen Schwingung des Wärmeübertragungsrohres und der Rohrwanddicke des Wärmeübertragungsrohres gegeben ist. Auf diese Weise ist eine robuste Auswertung praktikabel umsetzbar. Zweckmäßig kann eine Intensität des Interferenzsignals zeitabhängig detektiert werden. Die detektierte Intensität des Interferenzsignals kann zur Auswertung in einen mathematischen Frequenzraum überführt werden, üblicherweise mittels Fouriertransformation, um eine, insbesondere mehrere, Eigenfrequenzen zu ermitteln. Aus der bzw. den Eigenfrequenzen kann die Rohrwanddicke bestimmt werden. Zweckmäßig kann der faseroptische Sensor einen oder mehrere Detektoren aufweisen, um das Interferenzsignal zu detektieren. Eine Auswertung des Interferenzsignals, insbesondere Ermittlung der Eigenfrequenz bzw. Bestimmung der Rohrwanddicke, kann mit einer elektronischen Datenerfassungseinheit erfolgen. Die elektronische Datenerfassungseinheit kann Teil des Wärmetauschers, insbesondere Teil des faseroptischen Sensors, sein. Die elektronische Datenerfassungseinheit kann zur computergestützten Auswertung ausgebildet sein und insbesondere mit einem Mikrocontroller gebildet sein. Eine Genauigkeit der Bestimmung der Rohrwanddicke des Wärmeübertragungsrohres beträgt üblicherweise kleiner als 100 µm.

Die Messfaser bzw. Referenzfaser ist üblicherweise ausgebildet, eine elektromagnetische Welle, insbesondere die Messwelle bzw. Referenzwelle, zu leiten. Die Messfaser bzw. Referenzfaser ist in der Regel ein dielektrischer Wellenleiter, meist gebildet mit bzw. aus Quarzglas oder Kunststoff, bevorzugt ein Glasfaserkabel. Günstig ist es, wenn in einem Nicht-Betriebszustand des Wärmetauschers die Messfaser bzw. Messstrecke und Referenzfaser bzw. Referenzstrecke im Wesentlichen eine gleiche Länge aufweisen.

Die Messfaser ist üblicherweise schwingungsübertragend mit dem Wärmeübertragungsrohr verbunden, sodass im Betrieb des Wärmetauschers eine Länge der Messfaser bzw. der Messstrecke sich korrespondierend zu einer elastischen Schwingung, insbesondere einer Frequenz der elastischen Schwingung, des Wärmeübertragungsrohres ändert. Günstig ist es, wenn die Messfaser hierzu einen Interaktionsabschnitt aufweist, welcher schwingungsübertragend mit dem Wärmeübertragungsrohr verbunden ist. Der Interaktionsabschnitt kann zumindest einmal, bevorzugt mehrmals, um einen Umfang des Wärmeübertragungsrohres gewickelt sein. Der Interaktionsabschnitt der Messfaser kann eine oder mehrere Wicklungen, insbesondere zwischen 2 Wicklungen und 10 Wicklungen, bevorzugt zwischen 4 Wicklungen und 7 Wicklungen, meist etwa 5 Wicklungen, um einen Umfang des Wärmeübertagungsrohres bilden. Auf diese Weise kann im Betrieb des Wärmetauschers eine elastische Schwingung des Wärmeübertragungsrohres effizient auf die Messfaser wirken. Alternativ oder kumulativ kann der Interaktionsabschnitt eine mäanderförmige Form aufweisen. In einer einfachen Umsetzung kann der Interaktionsabschnitt geradlinig geformt sein. Die Messfaser, insbesondere deren Interaktionsabschnitt, kann stoffschlüssig, insbesondere mittels Klebstoff, mit dem Wärmeübertragungsrohr schwingungsübertragend verbunden sein. Der Klebstoff kann hierzu ausgebildet sein, eine starre Verbindung zwischen der Messfaser, insbesondere deren Interaktionsabschnitt, und dem Wärmeübertragungsrohr herzustellen.

Günstig ist es, wenn die Referenzfaser schwingungsentkoppelt mit dem Wärmeübertragungsrohr verbunden, bevorzugt um das Wärmeübertragungsrohr gewickelt, ist. Dies ist üblicherweise derart umgesetzt, dass im Betrieb des Wärmetauschers eine Länge der Referenzfaser bzw. der Referenzstrecke sich nicht wesentlich mit einer elastischen Schwingung, insbesondere einer Frequenz der elastischen Schwingung, des Wärmeübertragungsrohres ändert. Die Referenzfaser kann hierzu einen Interaktionsabschnitt aufweisen, welcher schwingungsentkoppelt mit dem Wärmeübertragungsrohr verbunden ist. Auf diese Weise können für die Messfaser bzw. Messstrecke und Referenzfaser bzw. Referenzstrecke ähnliche Randbedingungen umgesetzt werden, um eine hohe Genauigkeit der Bestimmung der Rohrwanddicke mit dem Sensor zu erreichen. Der Interaktionsabschnitt kann zumindest einmal, bevorzugt mehrmals, um einen Umfang des Wärmeübertragungsrohres gewickelt sein. Der Interaktionsabschnitt der Referenzfaser kann eine oder mehrere Wicklungen, insbesondere zwischen 2 Wicklungen und 10 Wicklungen, bevorzugt zwischen 4 Wicklungen und 7 Wicklungen, meist etwa 5 Wicklungen, um einen Umfang des Wärmeübertagungsrohres bilden. Alternativ oder kumulativ kann der Interaktionsabschnitt eine mäanderförmige Form aufweisen. In einer einfachen Umsetzung kann der Interaktionsabschnitt geradlinig geformt sein. Die Referenzfaser, insbesondere deren Interaktionsabschnitt, kann stoffschlüssig, insbesondere mittels Klebstoff, mit dem Wärmeübertragungsrohr schwingungsentkoppelt verbunden sein. Der Klebstoff kann hierzu eine elastische Verbindung zwischen der Referenzfaser und dem Wärmeübertragungsrohr, insbesondere deren Interaktionsabschnitt, herstellen. Bewährt hat es sich, wenn der Klebstoff mit Polydimethylsiloxan (PDMS) gebildet ist. Vorzugsweise weisen der Interaktionsabschnitt der Messfaser und der Interaktionsabschnitt der Referenzfaser eine gleiche Form auf. Von Vorteil ist es, wenn der Interaktionsabschnitt der Messfaser und der Interaktionsabschnitt der Referenzfaser gleich viele Wicklungen um das Wärmeübertragungsrohr bilden. Üblicherweise sind der Interaktionsabschnitt der Messfaser und der Interaktionsabschnitt der Referenzfaser am selben Wärmeübertragungsrohr, insbesondere entlang einer Längserstreckung des Wärmeübertragungsrohres, nebeneinander angeordnet, insbesondere mit diesem verbunden. Bewährt hat es sich, wenn dabei ein Abstand zwischen den Interaktionsabschnitten kleiner als 30 mm, bevorzugt kleiner als 10 mm, ist. Üblicherweise ist der Abstand dabei zwischen 1 mm und 30 mm, bevorzugt etwa 5 mm.

Die Wärmeübertragungsrohre sind üblicherweise zur Leitung des ersten Fluids ausgebildet, um durch Rohrwände der Wärmeübertragungsrohre hindurch Wärme zwischen dem ersten Fluid und dem zweiten Fluid zu übertragen. Vorzugsweise ist vorgesehen, dass im Betrieb des Wärmetauschers das zweite Fluid in, insbesondere unmittelbaren, Kontakt mit den Wärmeübertragungsrohren bzw. den Rohrwänden steht. Das erste Fluid ist üblicherweise ein im Betrieb des Wärmetauschers durch die Wärmeübertragungsrohre geleiteter erster Fluidstrom. Das zweite Fluid kann im Betrieb des Wärmetauschers ein zweiter Fluidstrom sein, welcher in der Regel die Wärmeübertragungsrohre umströmt.

Der Wärmetauscher weist üblicherweise eine Fluidkammer zur Aufnahme des zweiten Fluids auf, wobei die Wärmeübertragungsrohre innerhalb der Fluidkammer verlaufen. Die Fluidkammer bildet üblicherweise einen Fluidkammerhohlraum zwischen Fluidkammerwänden der Fluidkammer und den Wärmeübertragungsrohren, um für eine Wärmeübertragung zwischen dem ersten Fluid und dem zweiten Fluid das zweite Fluid mit dem Fluidkammerhohlraum aufzunehmen. Die Wärmeübertragungsrohre verlaufen üblicherweise durch den Fluidkammerhohlraum hindurch. In der Regel ist vorgesehen, dass im Betrieb des Wärmetauschers das zweite Fluid durch den Fluidkammerhohlraum geleitet wird, insbesondere derart, dass das zweite Fluid die Wärmeübertragungsrohre umströmt. Zweckmäßig kann der Fluidkammerhohlraum in Form eines oder mehrerer Kanäle ausgebildet sein, um im Betrieb des Wärmetauschers das zweite Fluid mit den Kanälen zu leiten. Die Fluidkammer weist üblicherweise zumindest einen Fluidkammereingang und zumindest einen Fluidkammerausgang auf, um über den Fluidkammereingang das zweite Fluid in die Fluidkammer, insbesondere in den Fluidkammerhohlraum, zu leiten und über den Fluidkammerausgang das zweite Fluid, in der Regel nach erfolgter Wärmeübertragung zwischen dem ersten Fluid und zweiten Fluid, wieder aus der Fluidkammer, insbesondere aus dem Fluidkammerhohlraum, abzuführen. Die Fluidkammer ist üblicherweise mit, insbesondere aus, Metall, vorzugsweise einer Eisenlegierung, besonders bevorzugt Stahl, gebildet.

In der Regel sind die Wärmeübertragungsrohre zumindest abschnittsweise voneinander beabstandet, sodass im Betrieb des Wärmetauschers das zweite Fluid für eine Wärmeübertragung mit den Wärmeübertragungsrohren zwischen den Wärmeübertragungsrohren hindurchströmen kann. Dies gilt insbesondere innerhalb der Fluidkammer bzw. dessen Fluidkammerhohlraum.

Üblicherweise sind das erste Fluid bzw. das zweite Fluid flüssig und/oder gasförmig ausgebildet. Beispielsweise kann das erste Fluid bzw. das zweite Fluid mit, insbesondere aus, flüssigem und gasförmigem Wasser gebildet sein. Es kann vorgesehen sein, dass das erste Fluid bzw. zweite Fluid mit, insbesondere aus, einem flüssigen Medium und einem gasförmigen Medium gebildet ist, wobei das flüssige Medium und das gasförmige Medium des jeweiligen Fluids in einander entgegengesetzten Richtungen, üblicherweise einander kontaktierend, durch den Wärmetauscher strömen. Beispielsweise kann das erste Fluid mit einem flüssigen Medium und einem gasförmigen Medium gebildet sein, wobei im jeweiligen Wärmeübertragungsrohr die Medien in einander entgegengesetzten Richtungen einander kontaktierend durch das Wärmeübertragungsrohr strömen.

Die Wärmeübertragungsrohre erstrecken sich üblicherweise zwischen einer ersten Rohrplatte und einer zweiten Rohrplatte, wobei die Rohrplatten den Fluidkammerhohlraum zur Aufnahme des zweiten Fluids begrenzen, wobei die Wärmeübertragungsrohre in Durchgangsöffnungen der jeweiligen Rohrplatte münden oder durch die Durchgangsöffnungen hindurchgeführt sind. Üblicherweise wird ein durch Durchgangsöffnungen einer der Platten eingeleitetes Fluid durch die Wärmeübertragungsrohre zu den Durchgangsöffnungen der anderen Rohrplatte geleitet. In der Regel sind die Wärmeübertragungsrohre fluiddicht mit den Rohrplatten verbunden. Üblicherweise ist die jeweilige Rohrplatte plattenförmig mit mehreren quer, insbesondere orthogonal, zu einer Längserstreckung der Rohrplatte orientierten Durchflusskanälen ausgebildet, welche Durchflusskanäle die Durchgangsöffnungen bilden. Die Rohrplatten können als Teile von Fluidkammerwänden der Fluidkammer ausgebildet sein. Der Wärmetauscher weist üblicherweise zumindest eine erste und zumindest eine zweite solche Rohrplatte auf. Die Rohrplatten sind üblicherweise mit, insbesondere aus, Metall, vorzugsweise einer Eisenlegierung, besonders bevorzugt Stahl, gebildet.

In der Fluidkammer können ein oder mehrere Fluidführungsflächen vorhanden sein, um mit den Fluidführungsflächen einen Strömungsweg des zweiten Fluids zu definieren. Die jeweilige Fluidführungsfläche ist üblicherweise ausgebildet, einen Fluiddurchfluss des zweiten Fluids zwischen den Wärmeübertragungsrohren abschnittsweise zu unterbinden. Die Fluidführungsflächen können einen Strömungsweg mit mehreren Umlenkkurven definieren, entlang welchem das zweite Fluid vom Fluidkammereingang zum Fluidkammerausgang geführt wird. Beispielsweise kann der Strömungsweg mäanderförmig sein. Üblicherweise verlaufen mehrere der Wärmeübertragungsrohre durch die jeweilige Führungsfläche hindurch. In der Regel sind mehrere die Wärmeübertragungsrohre querende voneinander beabstandete Führungsflächen vorgesehen. Die jeweilige Fluidführungsfläche ist üblicherweise quer, insbesondere orthogonal, zu einer Längserstreckung der Wärmeübertragungsrohre orientiert. In der Regel sind mehrere in Längsrichtung der Wärmeübertragungsrohre voneinander beabstandete Fluidführungsflächen vorgesehen. Üblicherweise wird mit der jeweiligen Fluidführungsfläche ein Zwischenraum zwischen mehreren der Wärmeübertragungsrohre im Wesentlichen verschlossen, um einen Durchfluss des zweiten Fluids durch den Zwischenraum zu unterbinden. Die jeweilige Fluidführungsfläche kann ausgebildet sein, in einem Querschnitt durch die Fluidkammer eine Mehrheit der Zwischenräume zwischen den Wärmeübertragungsrohren für einen Durchfluss des zweiten Fluids zu verschließen. Die Fluidführungsflächen können mit in der Fluidkammer angeordneten Führungswänden gebildet sein. Die Fluidführungsflächen sind in der Regel plattenförmig ausgebildet. Die Fluidkammer weist in der Regel ein oder mehrere solche Führungsflächen auf.

Üblicherweise sind mehrere der Wärmeübertragungsrohre durch Stabilisierungselemente miteinander verbunden, um die Wärmeübertragungsrohre im Betrieb des Wärmetauschers zu stabilisieren. Das jeweilige Stabilisierungselement kann plattenförmig ausgebildet sein, wobei eine Längserstreckung des Stabilisierungselementes in der Regel quer, insbesondere orthogonal, zu einer Längserstreckung der durch das Stabilisierungselement verbundenen Wärmeübertragungsrohre, orientiert ist. Üblicherweise verlaufen die Wärmeübertragungsrohre durch das Stabilisierungselement hindurch. Die Stabilisierungselemente werden fachüblich als Baffles bezeichnet. In der Regel sind entlang einer Längserstreckung der Wärmeübertragungsrohre mehrere voneinander beabstandete die Wärmeübertragungsrohre miteinander verbindende Stabilisierungselemente vorgesehen. Im Besonderen können die Fluidführungsflächen durch die Stabilisierungselemente gebildet sein. Die Stabilisierungselemente können dann sowohl zur Stabilisierung der Wärmeübertragungsrohre als auch Festlegung eines Strömungsweges des zweiten Fluids dienen.

Üblicherweise ist die Messfaser des jeweiligen faseroptischen Sensors innerhalb der Fluidkammer mit dem jeweiligen Wärmeübertragungsrohr schwingungsübertragend verbunden. Günstig ist es, wenn ein Detektor des faseroptischen Sensors zur Detektion des Interferenzsignals der entlang der Messstrecke und der entlang der Referenzstrecke geführten elektromagnetischen Wellen außerhalb der Fluidkammer, insbesondere des Fluidkammerhohlraums, angeordnet ist. Üblicherweise ist auch die elektronische Datenerfassungseinheit außerhalb der Fluidkammer, insbesondere des Fluidkammerhohlraums, angeordnet. Dadurch ist der Detektor bzw. die elektronische Datenerfassungseinheit vor Belastungen, insbesondere Druckbelastungen und/oder Temperaturbelastungen, im Besonderen des ersten bzw. zweiten Fluids, geschützt. In der Regel verläuft die Messfaser bzw. die Referenzfaser zumindest abschnittsweise durch die Fluidkammer, insbesondere den Fluidkammerhohlraum, hindurch bzw. im Betrieb des Wärmetauschers durch das zweite Fluid hindurch. Üblicherweise ist der Interaktionsabschnitt der Messfaser bzw. der Interaktionsabschnitt der Referenzfaser innerhalb der Fluidkammer mit dem jeweiligen Wärmeübertragungsrohr verbunden. Die Fluidkammer kann ein oder mehrere Faserdurchführungen aufweisen, mit welchen die Messfaser und Referenzfaser fluiddicht durch eine Fluidkammerwand der Fluidkammer hindurchgeführt sind, insbesondere aus der Fluidkammer hinausgeführt sind.

Zweckmäßig kann der faseroptische Sensor eine elektromagnetische Emissionsquelle, bevorzugt einen Laser, zur Erzeugung bzw. Emittierung elektromagnetischer Wellen, insbesondere der Messwelle und Referenzwelle, aufweisen, wobei die elektromagnetische Emissionsquelle mit der Messfaser und der Referenzfaser gekoppelt ist, um eine elektromagnetische Welle in die Messfaser und die Referenzfaser einzubringen. Die in die Messfaser und Referenzfaser eingebrachten elektromagnetischen Wellen sind in der Regel kohärent zueinander, sodass die elektromagnetischen Wellen nach Durchlaufen der Messstrecke und Referenzstrecke eine Interferenz bzw. ein Interferenzsignal bilden können. Vorteilhaft ist es, wenn die elektromagnetische Emissionsquelle bzw. die elektromagnetische Welle, insbesondere Messwelle bzw. Referenzwelle, eine Kohärenzlänge von mehr als 0,5 mm, insbesondere mehr als 1 mm, bevorzugt mehr als 2 mm, insbesondere bevorzugt mehr als 5 mm, aufweist. Üblicherweise ist die Kohärenzlänge zwischen 1 mm und 10 mm. Vorzugsweise ist die elektromagnetische Emissionsquelle, insbesondere der Laser, ausgebildet, eine elektromagnetische Welle, insbesondere Lichtwelle, mit einer Wellenlänge zwischen 500 nm und 2000 nm, insbesondere zwischen 1000 nm und 1500 nm, vorzugsweise von etwa 1300 nm, zu emittieren. Vorteilhaft für eine robuste Messung bzw. Bestimmung der Rohrwanddicke ist es, wenn der Laser zur Emission von elektromagnetischen Wellen mit einer Vertical-Cavity-Surface-Emitting-Laser-Diode (VCSEL) gebildet ist. Das Interferenzsignal weist üblicherweise eine im Wesentlichen periodische Struktur auf. Günstig ist es, wenn der elektromagnetischen Emissionsquelle in Einspeiserichtung nachgeordnet ein optischer Isolator, auch als optische Diode bezeichnet, nachgeordnet ist, um elektromagnetische Rückreflexionen zur elektromagnetischen Emissionsquelle zu minimieren, insbesondere zu verhindern. Einspeiserichtung bezeichnet üblicherweise eine Richtung, in welcher eine elektromagnetische Welle mit der elektromagnetischen Emissionsquelle der Messfaser bzw. der Referenzfaser zugeführt wird.

Es hat sich gezeigt, dass es auch möglich ist, wenngleich in Bezug auf eine Robustheit weniger bevorzugt, die Rohrwanddicke zu bestimmen, wenn die Kohärenzlänge zwischen 10 µm und 500 µm, insbesondere zwischen 20 µm und 100 µm, bevorzugt zwischen 25 µm und 50 µm, beispielsweise etwa 30 µm, beträgt. In der Regel weist das Interferenzsignal dann eine nicht-periodische Struktur mit einem Maximum, insbesondere mehreren Maxima, auf. Das Interferenzsignal bzw. die nicht-periodische Struktur weist häufig eine oder mehrere gaußfunktionartige Substrukturen auf. Ein Maximum, insbesondere ein Abstand zwischen mehreren der Maxima, des Interferenzsignals, insbesondere der gaußfunktionartigen Substrukturen, korrespondiert in der Regel zu einem Gangunterschied zwischen der Messwelle und Referenzwelle. Günstig ist es dann, wenn in einem Nicht-Betriebszustand des Wärmetauschers ein Längenunterschied zwischen einer Länge der Messfaser bzw. Messtrecke und einer Länge der Referenzfaser bzw. Referenzstrecke kleiner ist als die Kohärenzlänge.

Von Vorteil ist es, wenn die Messfaser und die Referenzfaser jeweils ein Reflexionselement aufweisen oder an ein solches anschließen, um eine entlang der Messstrecke bzw. Referenzstrecke geleitete elektromagnetische Welle mit dem Reflexionselement, insbesondere jeweils entlang der Messstrecke bzw. Referenzstrecke zurück, zu reflektieren. Üblicherweise wird die Messwelle nach Durchlaufen der Messstrecke und die Referenzwelle nach Durchlaufen der Referenzstrecke entlang der Messstrecke bzw. Referenzstrecke mit dem Reflexionselement zurückreflektiert. Das Reflexionselement weist vorzugsweise eine Reflexionsfläche auf, um die jeweilige elektromagnetische Welle zu reflektieren. Zweckmäßig ist es, wenn das Reflexionselement bzw. die Reflexionsfläche einen Reflexionsgrad von mehr als 90 %, insbesondere mehr als 95 %, bevorzugt mehr als 98 %, aufweist. Das Reflexionselement kann ein Spiegel sein. Bewährt hat es sich, wenn jeweils an einem Faserende der Messfaser bzw. Referenzfaser ein solches Reflexionselement angeordnet ist. Üblicherweise ist das Faserende jenes der Faserenden der Messfaser bzw. Referenzfaser, welches entlang der jeweiligen Faser in Einspeiserichtung der elektromagnetischen Welle mit der elektromagnetischen Emissionsquelle nachgeordnet ist. In der Regel ist in Einspeiserichtung entlang der jeweiligen Faser das Reflexionselement der Messstrecke bzw. Referenzstrecke nachgeordnet. Das Reflexionselement kann mit, insbesondere durch, eine am Faserende der Messfaser bzw. Referenzfaser angeordnete Metallschicht gebildet sein. Die Metallschicht kann mit, insbesondere aus, Gold, Silber und/oder Aluminium, gebildet sein. Vorzugsweise ist die Metallschicht mit Sputtern auf das Faserende aufgebracht. Das Reflexionselement kann ein Bragg-Spiegel, insbesondere dielektrischer Spiegel, sein. Das Reflexionselement kann mit einer oder mehreren Dünnschichten gebildet sein, welche aufeinander aufgebracht sein können. Die Dünnschichten können mit Dünnschichtabscheidung aufgebracht sein. Die Dünnschichten können mit, insbesondere im Wesentlichen aus, Magnesiumfluorid, Siliciumdioxid, Tantal(V)-oxid, Zinksulfid und/oder Titandioxid gebildet sein.

Bevorzugt kann der faseroptische Sensor einen Interferometer-Aufbau nach Art eines Michelson-Interferometers aufweisen, wobei elektromagnetische Wellen über die Messfaser entlang der Messstrecke und über die Referenzfaser entlang der Referenzstrecke verlaufen, an einem jeweiligen Ende der Messstrecke und Referenzstrecke, insbesondere dem jeweiligen Faserende, reflektiert werden, um die reflektierten elektromagnetischen Wellen zur Bildung eines Interferenzsignals zu überlagern.

Günstig ist es, wenn die Messfaser und die Referenzfaser an einer Koppelstelle miteinander gekoppelt sind, um mit einer entlang der Messstrecke übertragenen elektromagnetischen Welle und einer entlang der Referenzstrecke übertragenen elektromagnetischen Welle ein Interferenzsignal bilden. Die Koppelstelle wird üblicherweise durch mechanisches Verbinden von Messfaser und Referenzfaser umgesetzt.

Bewährt hat es sich, wenn der faseroptische Sensor einen optischen Koppler mit mehreren Eingangsleitungen und mehreren Ausgangsleitungen aufweist, wobei die Eingangsleitungen und die Ausgangsleitungen zur verteilten Übertragung von elektromagnetischen Wellen miteinander verbunden sind. Der optische Koppler kann die Koppelstelle bilden. Üblicherweise sind die Eingangsleitungen und Ausgangsleitungen derart verbunden, dass eine über die Eingangsleitung dem optischen Koppler zugeführte elektromagnetische Welle an die mehreren Ausgangsleitungen übertragen wird bzw. eine über eine der Ausgangsleitungen dem optischen Koppler zugeführte elektromagnetische Welle an die mehreren Eingangsleitungen übertragen wird. Praktikabel ist es, wenn die elektromagnetische Emissionsquelle mit einer der Eingangsleitungen verbunden ist und die Messfaser und die Referenzfaser jeweils mit einer der Ausgangsleitungen verbunden sind, sodass eine mit der Emissionsquelle in die Eingangsleitung eingebrachte elektromagnetische Welle über die Ausgangsleitungen in die Messfaser und die Referenzfaser eingeleitet wird. Üblicherweise ist die Messfaser und die Referenzfaser jeweils mit einer Ausgangsleitung verbunden, sodass über die Messfaser und die Referenzfaser in die Ausgangsleitungen eingebrachte elektromagnetische Wellen, insbesondere entlang Messfaser bzw. Referenzfaser zurückreflektierte elektromagnetische Wellen, an eine oder mehreren der Eingangsleitungen weitergeleitet werden, sodass die elektromagnetischen Wellen an der jeweiligen Eingangsleitung als Interferenzsignal ausgegeben werden. Zweckmäßig kann an einer oder mehreren der Eingangsleitungen ein Detektor zur Detektion des Interferenzsignal angeordnet sein. Günstig ist es, wenn mit einer oder mehreren der Eingangsleitungen jeweils ein Detektor, bevorzugt gebildet mit einer Photodiode, verbunden ist, um ein entlang der Messfaser und Referenzfaser jeweils in die Ausgangsleitung zurückreflektierte elektromagnetische Welle an den Eingangsleitungen mit dem jeweiligen Detektor als Interferenzsignal zu detektieren. Beispielsweise kann der optische Koppler zumindest drei Eingangsleitungen und zumindest zwei Ausgangsleitungen aufweisen, wobei an eine der Eingangsleitungen die elektromagnetische Emissionsquelle und an zwei weiteren Eingangsleitungen jeweils ein Detektor anschließt und wobei an eine der Ausgangsleitungen die Messfaser und an eine weitere Ausgangsleitung die Referenzfaser anschließt.

Der Detektor kann ausgebildet sein, das Interferenzsignal, insbesondere eine Intensität des Interferenzsignals, zeitabhängig zu detektieren. Der Detektor ist üblicherweise ein optoelektronischer Detektor, welcher in der Regel mit einer bzw. als Photodiode, ausgebildet ist. Der Detektor ist üblicherweise zur Datenübertragung mit der elektronischen Datenerfassungseinheit verbunden.

Das zweite Fluid weist im Betrieb des Wärmetauschers üblicherweise einen Druck von mehr als 30 bar, insbesondere zwischen 30 bar und 200 bar, vorzugsweise etwa 180 bar, auf und/oder eine Temperatur von mehr als 80°C, insbesondere zwischen 80°C und 300°C, vorzugsweise etwa 230°C, auf. Das erste Fluid kann einen höheren Druck und/oder eine höhere Temperatur als das zweite Fluid aufweisen. Üblicherweise ist vorgesehen bzw. der Wärmetauscher derart ausgebildet, dass die Messfaser im Betrieb des Wärmetauschers zumindest abschnittsweise durch das zweite Fluid hindurch verläuft. Günstig ist es, wenn der faseroptische Sensor derart ausgebildet ist, dass die Messfaser bzw. die Referenzfaser bei einem Einsatzdruck von mehr als 30 bar und/oder einer Einsatztemperatur von mehr als 80°C einsetzbar ist. Insbesondere ist es entsprechend günstig, wenn der Einsatzdruck zwischen 30 bar und 200 bar, vorzugsweise etwa 180 bar, beträgt und/oder die Einsatztemperatur zwischen 80°C und 300°C, vorzugsweise etwa 230°C, beträgt.

Von Vorteil ist es, wenn die Messfaser bzw. die Referenzfaser zum Schutz vor einem Umgebungsdruck und/oder einer Umgebungstemperatur zumindest abschnittsweise innerhalb eines Schutzmantels verläuft. Üblicherweise ist der Schutzmantel mit, insbesondere aus, Metall, insbesondere mit bzw. aus Kupfer und/oder Eisen, bevorzugt Stahl, insbesondere bevorzugt austenitischem Stahl, gebildet. Alternativ kann der Schutzmantel mit, insbesondere im Wesentlichen aus, Kunststoff, insbesondere Polyimid, gebildet sein. Günstig ist es, wenn ein Segment der Messfaser bzw. ein Segment der Referenzfaser, welches Segment innerhalb der Fluidkammer, insbesondere im Betrieb des Wärmetauschers durch das zweite Fluid verläuft, innerhalb eines solchen Schutzmantels verläuft. Das Segment kann mit einem überwiegenden Teil einer, insbesondere im Wesentlichen einer gesamten, innerhalb der Fluidkammer verlaufenden Längserstreckung der Messfaser bzw. Referenzfaser gebildet sein. Der Schutzmantel kann mit einer bzw. als eine auf die Messfaser bzw. auf die Referenzfaser aufgebrachte Beschichtung umgesetzt sein. Die Messfaser bzw. die Referenzfaser können jeweils als Teil eines optischen Kabels ausgebildet sein, wobei der Schutzmantel eine Außenhülle des optischen Kabels bildet.

Vorteilhaft ist es, wenn mehrere faseroptische Sensoren, welche zur Bestimmung einer jeweiligen Rohrwanddicke an unterschiedlichen der Wärmeübertragungsrohren angeordnet sind, eine gemeinsame elektromagnetische Emissionsquelle aufweisen. Zweckmäßig kann die elektromagnetische Emissionsquelle derart mit den Messfasern und Referenzfasern der faseroptischen Sensoren gekoppelt sein, dass eine mit der elektromagnetischen Emissionsquelle erzeugte elektromagnetische Welle aufgeteilt und in die Messfasern und Referenzfasern eingeleitet wird. Dies kann mit einer oder mehreren optischen Einspeisefasern umgesetzt sein, welche die elektromagnetische Emissionsquelle und die Messfasern bzw. Referenzfasern zur Übertragung einer elektromagnetischen Welle verbinden. Zweckmäßig kann die Einspeisefaser einen Hauptzweig und mehrere vom Hauptzweig abzweigende Nebenzweige aufweisen, sodass eine in den Hauptzweig mit der elektromagnetischen Emissionsquelle eingeleitete elektromagnetische Welle auf die Nebenzweige aufgeteilt wird, um die elektromagnetische Welle über die Nebenzweige zur Messfaser und Referenzfaser des jeweiligen faseroptischen Sensors zu führen. Der jeweilige faseroptische Sensor kann einen, insbesondere vorgenannten, optischen Koppler aufweisen, wobei die Einspeisefaser mit einer Eingangsleitung des jeweiligen optischen Kopplers verbunden ist, um über die Einspeisefaser eine elektromagnetische Welle in die Eingangsleitung zuzuführen. Zweckmäßig kann jeweils ein Nebenzweig mit jeweils einer Eingangsleitung des jeweiligen faseroptischen Sensors zur Übertragung einer elektromagnetischen Welle verbunden sein.

Günstig ist es, wenn mehrere faseroptische Sensoren, welche zur Bestimmung einer jeweiligen Rohrwanddicke an unterschiedlichen der Wärmeübertragungsrohre angeordnet sind, eine gemeinsame, insbesondere vorgenannte, elektronische Datenerfassungseinheit aufweisen oder mit einer solchen verbunden sind.

Vorteilhaft ist es, wenn der faseroptische Sensor mehrere elektromagnetische Emissionsquellen mit unterschiedlicher Wellenlänge und/oder Kohärenzlänge deren erzeugbaren elektromagnetischen Welle aufweist. Die elektromagnetischen Emissionsquellen können wie in diesem Dokument beschrieben ausgebildet sein. Günstig ist es, wenn die elektromagnetischen Emissionsquellen derart mit der Messfaser und Referenzfaser gekoppelt sind, dass mit verschiedenen Emissionsquellen erzeugte elektromagnetische Wellen einander überlagert über die Messfaser und Referenzfaser übertragbar sind. Vorteilhaft ist es, wenn mehrere Detektoren vorgesehen sind, wobei die Detektoren derart ausgebildet und/oder mit der Messfaser und Referenzfaser, insbesondere über den optischen Koppler, verbunden sind, dass mit den Detektoren unterschiedliche der Interferenzsignale detektiert werden. Praktikabel ist es, wenn die Detektoren über einen wellenlängenselektierenden Demultiplexer mit der Messfaser und Referenzfaser gekoppelt sind, um Interferenzsignale von elektromagnetischen Wellen unterschiedlicher Wellenlänge an verschiedenen Ausgängen des Demultiplexers auszugeben. Die Detektoren sind dann üblicherweise mit verschiedenen Ausgängen des Demultiplexers zur Detektion eines Interferenzsignals verbunden. Ein Eingang des Demulitplexers kann mit der Messfaser und Referenzfaser, üblicherweise über den optischen Koppler, zur Übertragung elektromagnetischer Wellen verbunden sein. Die verschiedenen Emissionsquellen weisen dann üblicherweise unterschiedliche Wellenlängen der von diesen erzeugbaren elektromagnetischen Wellen auf.

Für eine hohe Genauigkeit einer Bestimmung einer Rohrwanddicke ist es vorteilhaft, wenn eine Korrelationsfunktion zwischen Rohrwanddicke und einer oder mehrere Eigenfrequenzen einer elastischen Schwingung eines Wärmeübertragungsrohres festgelegt wird. Die Korrelationsfunktion kann abhängig von einem Material und einer Größe, insbesondere einem Durchmesser und/oder einer Länge, des Wärmeübertragungsrohres festgelegt werden. Alternativ oder kumulativ kann die Korrelationsfunktion mit einer Kalibration festgelegt werden, wobei üblicherweise eine Eigenfrequenz einer elastischen Schwingung eines Wärmeübertragungsrohres bei unterschiedlichen bekannten Rohrwanddicke des Wärmeübertragungsrohres gemessen wird.

Üblicherweise ist an mehreren der Wärmeübertragungsrohre des Wärmetauschers jeweils ein faseroptischer Sensor, insbesondere dessen Messfaser bzw. Referenzfaser, angeordnet. Es können auch jeweils mehrere faseroptische Sensoren an mehreren der Wärmeübertragungsrohre angeordnet sein. Die Wärmeübertragungsrohre sind in der Regel mit, insbesondere aus, Metall, insbesondere einer Eisenlegierung, bevorzugt einer Stahllegierung, gebildet.

Üblicherweise ist der faseroptische Sensor, insbesondere dessen Messfaser bzw. Referenzfaser, in einem Anordnungsbereich am jeweiligen Wärmeübertragungsrohr angeordnet. Der Anordnungsbereich ist vorzugsweise ein Bereich, in welchem im Betrieb des Wärmetauschers bevorzugt Korrosion auftritt. Der Anordnungsbereich hängt häufig von einer Produktionskapazität ab. Günstig ist es, wenn der jeweilige faseroptische Sensor, insbesondere dessen Messfaser bzw. Referenzfaser, in einem Anordnungsbereich am jeweiligen Wärmeübertragungsrohr angeordnet ist, wobei der Anordnungsbereich, insbesondere in Durchströmungsrichtung des ersten Fluids durch das Wärmeübertragungsrohr, ausgehend von einem Eintritt des Wärmeübertragungsrohres in die Fluidkammer, insbesondere den Fluidkammerhohlraum, entlang einer Längserstreckung des Wärmeübertragungsrohres durch zwei Drittel einer Längserstreckung des Wärmeübertragungsrohres innerhalb der Fluidkammer bzw. des Fluidkammerhohlraums definiert ist. Im Besonderen kann sich der Anordnungsbereich des jeweiligen Wärmeübertragungsrohres, insbesondere in Durchströmungsrichtung des ersten Fluids durch das Wärmeübertragungsrohr, üblicherweise ausgehend von einem Eintritt des Wärmeübertragungsrohres in die Fluidkammer, insbesondere den Fluidkammerhohlraum, entlang einer Längserstreckung des Wärmeübertragungsrohres mit einer Länge von 30 %, insbesondere 20 %, bevorzugt 10 % einer Längserstreckung des Wärmeübertragungsrohres innerhalb der Fluidkammer bzw. des Fluidkammerhohlraums erstrecken. Dies gilt vorzugsweise, wenn der Wärmetauscher, insbesondere Stripper, Teil einer Harnstoffanlage zur Produktion von Harnstoff, insbesondere zur Harnstoffsynthese, ist, wobei die Harnstoffanlage eine Produktionskapazität von kleiner als 2700 MTPD (metrische Tonnen pro Tag) aufweist. Alternativ kann der Anordnungsbereich des jeweiligen Wärmeübertragungsrohres, insbesondere in Durchströmungsrichtung des ersten Fluids durch das Wärmeübertragungsrohr, üblicherweise ausgehend von einem Eintritt des Wärmeübertragungsrohres in die Fluidkammer, insbesondere den Fluidkammerhohlraum, entlang einer Längserstreckung des Wärmeübertragungsrohres durch einen Abschnitt eines zweiten Drittels einer Längserstreckung des Wärmeübertragungsrohres innerhalb der Fluidkammer bzw. des Fluidkammerhohlraums definiert sein. Dies gilt vorzugsweise, wenn der Wärmetauscher, insbesondere Stripper, Teil einer Harnstoffanlage zur Produktion von Harnstoff, insbesondere zur Harnstoffsynthese, ist, wobei die Harnstoffanlage eine Produktionskapazität von größer als oder gleich 2700 MTPD (metrische Tonnen pro Tag) aufweist. Es hat sich gezeigt, dass in der Regel in diesem Anordnungsbereich des jeweiligen Wärmeübertragungsrohres eine Materialabtragung bzw. ein Verschleiß des Wärmeübertragungsrohres besonders groß ist, weshalb es günstig ist, die faseroptischen Sensoren in diesem Bereich zu positionieren. In der Regel ist der Anordnungsbereich, insbesondere in Durchströmungsrichtung des ersten Fluids durch das Wärmeübertragungsrohr, im ersten Drittel und/oder im zweiten Drittel einer Länge der Fluidkammer bzw. des Fluidkammerhohlraums, angeordnet. Dabei ist im zweiten Drittel insbesondere ein Bereich einer Mitte der Länge der Fluidkammer bzw. des Fluidkammerhohlraums bevorzugt.

Das weitere Ziel wird durch ein Verfahren der eingangs genannten Art zum Betreiben eines Wärmetauschers gelöst, wenn an einem oder mehreren Wärmeübertragungsrohren, mit welchen ein erstes Fluid transportiert wird, um über die Wärmeübertragungsrohre Wärme zwischen dem ersten Fluid und einem zweiten Fluid zu übertragen, jeweils ein faseroptischer Sensor angeordnet ist, wobei mit dem faseroptischen Sensor während eines Betriebs des Wärmetauschers interferometrisch eine elastische Schwingung, insbesondere Eigenschwingung, des jeweiligen Wärmeübertragungsrohres ermittelt wird, um während des Betriebs des Wärmetauschers eine Rohrwanddicke des jeweiligen Wärmeübertragungsrohres zu bestimmen. Das Verfahren kann insbesondere mit einem vorgenannten Wärmetauscher umgesetzt sein. Üblicherweise bezeichnet die Rohrwanddicke des Wärmeübertragungsrohres in einem Querschnitt des Wärmeübertragungsrohres einen, insbesondere radialen, Abstand zwischen einer Innenfläche und einer Außenfläche einer Rohrwand des Wärmeübertragungsrohres. Üblicherweise befindet sich das zweite Fluid außerhalb der Wärmeübertragungsrohre, sodass Wärme durch die Rohrwände der Wärmeübertragungsrohre hindurch zwischen dem ersten Fluid und zweiten Fluid übertragen wird.

Insbesondere wie vorstehend ausgeführt, ist auf diese Weise eine robuste Bestimmung einer Rohrwanddicke einer Rohrwand des jeweiligen Wärmeübertragungsrohres, insbesondere in einer Hochdruck- und/oder Hochtemperaturumgebung, in einem Wärmetauscher während eines Betriebs des Wärmetauschers ermöglicht. Dadurch kann ein Betrieb, insbesondere eine Prozessführung, und/oder eine Wartung des Wärmetauschers abhängig von der mit dem faseroptischen Sensor bestimmten Rohrwanddicke erfolgen. Auf diese Weise ist eine optimierte Einsatzfähigkeit des Wärmetauschers bzw. ein optimierter Betrieb des Wärmetauchers ermöglicht.

Es versteht sich, dass das Verfahren zum Betreiben eines Wärmetauschers entsprechend den Merkmalen und Wirkungen, welche im Rahmen eines Wärmetauschers, insbesondere vorstehend, in diesem Dokument beschrieben sind, ausgebildet sein kann. Analoges gilt auch für den Wärmetauscher im Hinblick auf das Verfahren.

Vorteilhaft ist es, wenn der faseroptische Sensor eine optische Messfaser, welche eine Messstrecke bildet, und eine optische Referenzfaser, welche eine Referenzstrecke bildet, aufweist, wobei die Messfaser schwingungsübertragend mit dem Wärmeübertragungsrohr verbunden ist, wobei mit Detektion, insbesondere Messung, eines Interferenzsignals von einer entlang der Messstrecke geführten elektromagnetischen Welle und einer entlang der Referenzstrecke geführten elektromagnetischen Welle eine elastische Schwingung, insbesondere Frequenz der elastischen Schwingung, des Wärmeübertragungsrohres ermittelt wird. Üblicherweise wird eine Interferenz zwischen einer entlang der Messstrecke geführten elektromagnetischen Welle und einer entlang der Referenzstrecke geführten elektromagnetischen Welle hergestellt, sodass die elektromagnetischen Wellen ein Interferenzsignal bilden. Das Interferenzsignal wird üblicherweise mit einem Detektor detektiert, um mit dem detektierten Interferenzsignal eine Frequenz, insbesondere Eigenfrequenz, der elastischen Schwingung des Wärmeübertragungsrohres zu ermitteln. Es können mehrere Frequenzen, insbesondere Eigenfrequenzen, der elastischen Schwingung ermittelt werden. Aus der bzw. den Frequenzen, insbesondere Eigenfrequenzen, kann die Rohrwanddicke bestimmt werden.

Vorzugsweise ist der faseroptische Sensor ausgebildet, die Rohrwanddicke des Wärmeübertragungsrohres mit einer Genauigkeit von kleiner als 100 µm zu bestimmen.

Besonders günstig ist es, wenn das Verfahren zum Betreiben des Wärmetauschers zur Harnstoffsynthese eingesetzt ist. Der Wärmetauscher kann, insbesondere zur Harnstoffsynthese, als Stripper zur Strippung ausgebildet sein, wobei üblicherweise vorgesehen ist, dass eine Flüssigphase und Gasphase mit einander entgegenstehenden Durchströmungsrichtungen, in der Regel innerhalb der Wärmeübertragungsrohre, miteinander in Kontakt gebracht werden. Günstig ist es, wenn durch das jeweilige Wärmeübertragungsrohr in einer Durchströmungsrichtung ein erstes Medium fließt und in einer der Durchströmungsrichtung entgegengesetzten Richtung durch das Wärmeübertragungsrohr ein zweites Medium fließt, um miteinander zu reagieren, wobei in der Regel eines der Medien flüssig und das andere Medium gasförmig ist. Dies erfolgt üblicherweise innerhalb der Fluidkammer bzw. des Fluidkammerhohlraums. Das erste Fluid kann mit bzw. aus dem ersten Medium und zweiten Medium gebildet sein. Günstig ist es, wenn die Wärmeübertragungsrohre bzw. eine Durchströmungsrichtung des ersten Fluids durch die Wärmeübertragungsrohre im Wesentlichen vertikal ausgerichtet sind, insbesondere wenn der Wärmetauscher ein Stripper ist. Der Wärmetauscher bzw. Stripper weist in der Regel eine Mehrzahl, insbesondere mehr als 10, bevorzugt mehr als 50, insbesondere bevorzugt mehr als 100, besonders bevorzugt mehr als 1000, Wärmeübertragungsrohre auf.

Üblicherweise weist der Wärmetauscher, insbesondere wenn dieser ein Stripper ist, einen ersten Einlass, über welchen das erste Medium in die Wärmeübertragungsrohre zuführbar ist, und einen zweiten Einlass, über welchen das zweite Medium in die Wärmeübertragungsrohre zuführbar ist, auf, sodass innerhalb der Fluidkammer bzw. dem Fluidkammerhohlraum die Medien mit einander entgegenstehenden Durchströmungsrichtungen durch die Wärmeübertragungsrohre fließen, um miteinander zu reagieren. Der erste Einlass und der zweite Einlass sind üblicherweise in Bezug auf den Fluidkammerhohlraum an unterschiedlichen Enden der Wärmeübertragungsrohre mit den Wärmeübertragungsrohren fluidleitend verbunden. In der Regel weist der Wärmetauscher zumindest einen Auslass zur Abfuhr eines mit einer Reaktion zwischen dem ersten Medium und dem zweiten Medium gebildeten Produktes aus den Wärmeübertragungsrohren auf. Praktikabel kann der Wärmetauscher einen ersten Auslass, über welchen ein erstes Produkt aus den Wärmeübertragungsrohren abführbar ist, und einen zweiten Auslass, über welchen ein zweites Produkt aus den Wärmeübertragungsrohren abführbar ist, aufweisen, wobei die Auslässe in Bezug auf den Fluidkammerhohlraum an unterschiedlichen Enden der Wärmeübertragungsrohre mit den Wärmeübertragungsrohren fluidleitend verbunden sind. Das erste Produkt und zweite Produkt werden üblicherweise mit bzw. durch die Reaktion zwischen dem ersten Medium und zweiten Medium gebildet. Dies gilt insbesondere, wenn der Wärmetauscher als Stripper ausgebildet ist.

Zur Harnstoffsynthese ist üblicherweise das erste Medium mit, insbesondere aus, Harnstoff, Ammoniumcarbamat und Ammoniak und das zweite Medium mit, insbesondere aus, gasförmigen Kohlenstoffdioxid (CO₂) gebildet. Auf diese Weise kann als Produkt, insbesondere erstes Produkt, Harnstoff, insbesondere hoher Reinheit, abgespalten werden, welcher, üblicherweise an einem der Enden des Wärmeübertragungsrohres bzw. über den ersten Auslass, aus dem Wärmeübertragungsrohr abgeleitet wird. Zweckmäßig kann gebildetes Prozessgas, in der Regel gasförmiges Ammoniak (NH₃) und/oder gasförmiges Kohlenstoffdioxid (CO₂), meist an einem anderen Ende des Wärmeübertragungsrohres bzw. über den zweiten Auslass, aus dem Wärmeübertragungsrohr abgeleitet werden. Das zweite Fluid kann mit, insbesondere aus, flüssigem und/oder gasförmigem Wasser gebildet sein. Der Stripper kann wie in diesem Dokument insbesondere zum Wärmetauscher beschrieben, ausgebildet sein bzw. betrieben werden.

Zweckmäßig ist es, wenn die mit der Messfaser bzw. Referenzfaser geführte elektromagnetische Welle eine Kohärenzlänge von mehr als 2 mm, insbesondere mehr als 5 mm, aufweist. Dadurch kann ein robustes Interferenzsignal durch Herstellung einer Interferenz zwischen der entlang der Messstrecke und der entlang der Referenzstrecke geführten elektromagnetischen Welle umgesetzt werden. Insbesondere kann die Kohärenzlänge wie vorstehend beschrieben sein.

Üblicherweise weist das zweite Fluid einen Druck von mehr als 30 bar, insbesondere zwischen 30 bar und 200 bar, vorzugsweise etwa 180 bar, auf und/oder eine Temperatur von mehr als 80°C, insbesondere zwischen 80°C und 300°C, vorzugsweise etwa 230°C, auf.

Es versteht sich, dass sich üblicherweise der faseroptische Sensor und dessen Ausbildung und/oder Anordnung am Wärmeübertragungsrohr auf jenes Wärmeübertragungsrohr bezieht, auf welchem der faseroptische Sensor angeordnet ist bzw. mit welchem der faseroptische Sensor zur Messung der Rohrwanddicke des Wärmeübertragungsrohres verbunden ist. Zweckmäßig können mehrere faseroptische Sensoren auf verschiedenen der Wärmeübertragungsrohre angeordnet bzw. mit verschiedenen der Wärmeübertragungsrohre verbunden sein, insbesondere jeweils mit einer in diesem Dokument beschriebenen Umsetzung.

Weitere Merkmale, Vorteile und Wirkungen der Erfindung ergeben sich aus der nachfolgenden Darstellung eines Ausführungsbeispiels. In den Zeichnungen, auf welche dabei Bezug genommen wird, zeigen:
Fig. 1 eine schematische Darstellung eines Wärmetauschers mit faseroptischem Sensor;
Fig. 2 eine schematische Darstellung eines faseroptischen Sensors, welcher an einem Wärmeübertragungsrohr angeordnet ist;
Fig. 3 einen Graphen, welcher eine Resonanzfrequenz über einer Rohrwanddicke darstellt;
Fig. 4 eine schematische Darstellung eines weiteren Wärmetauschers mit faseroptischem Sensor;
Fig. 5 eine schematische Darstellung von an Wärmeübertragungsrohren angeordneten faseroptischen Sensoren mit gemeinsamer elektromagnetischer Emissionsquelle;
Fig. 6 eine schematische Darstellung eines weiteren faseroptischen Sensors, welcher an einem Wärmeübertragungsrohr angeordnet ist;
Fig. 7 eine schematische Darstellung eines als Stripper ausgebildeten Wärmetauschers mit faseroptischem Sensor.

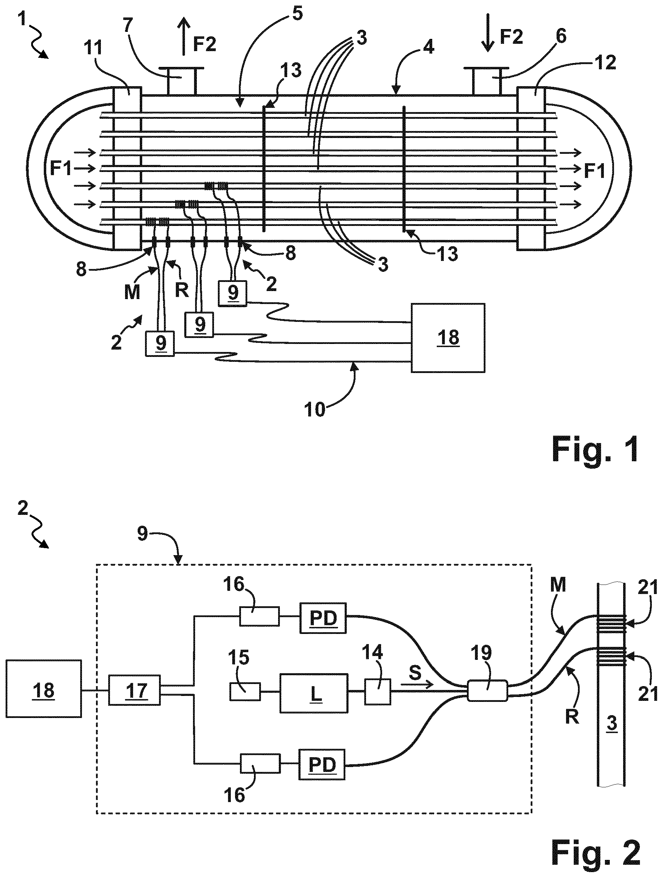

In Fig. 1 ist schematisch ein Wärmetauscher 1 dargestellt, wobei der Wärmetauscher 1 mehrere Wärmeübertragungsrohre 3 und eine Fluidkammer 4 aufweist, wobei die Wärmeübertragungsrohre 3 durch die Fluidkammer 4 verlaufen, um im Betrieb des Wärmetauschers 1 durch die Wärmeübertragungsrohre 3 ein erstes Fluid F1 hindurchzuleiten und durch die Fluidkammer 4 die Wärmübertragungsrohre umgebend ein zweites Fluid F2 hindurchzuleiten, sodass durch die Rohrwände der Wärmeübertragungsrohre 3 hindurch Wärme zwischen dem ersten Fluid F1 und dem zweiten Fluid F2 übertragen wird. Die Fluidkammer 4 bildet einen Fluidkammerhohlraum 5 zwischen Fluidkammerwänden und den Wärmeübertragungsrohren 3, um das zweite Fluid F2 aufzunehmen bzw. durch welchen das zweite Fluid F2 geleitet wird. Die Fluidkammer 4 weist einen Fluidkammereingang 6 zum Zuführen des zweiten Fluids F2 in die Fluidkammer 4, insbesondere den Fluidkammerhohlraum 5, und einen Fluidkammerausgang 7 zum Abführen des Fluids aus der Fluidkammer 4, insbesondere dem Fluidkammerhohlraum 5, auf. Üblicherweise sind die Wärmeübertragungsrohre 3 beabstandet voneinander durch die Fluidkammer 4 geführt, sodass das zweite Fluid F2 zwischen den Wärmeübertragungsrohren 3 hindurchströmen kann. Der Wärmetauscher 1 kann als Stripper ausgebildet sein. Der Wärmetauscher 1, insbesondere Stripper, ist häufig derart ausgebildet bzw. ausgerichtet, dass eine Längsrichtung der Wärmeübertragungsrohre 3 im Wesentlichen vertikal orientiert ist.

An mehreren der Wärmeübertragungsrohre 3 sind faseroptische Sensoren 2 angeordnet, um während eines Betriebs des Wärmetauschers 1 mit dem jeweiligen Wärmetauscher 1 eine Rohrwanddicke des jeweiligen Wärmeübertragungsrohres 3 zu bestimmen. Der jeweilige faseroptische Sensor 2 ist ausgebildet, während eines Betriebs des Wärmetauschers 1 eine Frequenz, insbesondere eine Eigenfrequenz, einer elastischen Schwingung des Wärmeübertragungsrohres 3 interferometrisch zu ermitteln. Der jeweilige faseroptische Sensor 2 weist eine optische Messfaser M und ein optische Referenzfaser R auf, um mit der Messfaser M eine elektromagnetische Messwelle entlang einer Messstrecke zu führen und mit der Referenzfaser R eine elektromagnetische Referenzwelle entlang einer Referenzstrecke zu führen, ersichtlich auch in Fig. 2. Die Messfaser M und Referenzfaser R sind mit demselben Wärmeübertragungsrohr 3 verbunden, wobei ein Interaktionsabschnitt 21 der Messfaser M und ein Interaktionsabschnitt 21 der Referenzfaser R am Wärmeübertragungsrohr 3 nebeneinander mehrmals um das gleiche Wärmeübertragungsrohr 3 gewickelt sind. Der jeweilige Interaktionsabschnitt 21 ist mit einem Endbereich der Messfaser M bzw. Referenzfaser R gebildet. Die Messfaser M ist schwingungsübertragend mit dem Wärmeübertragungsrohr 3 verbunden, sodass eine elastische Schwingung des Wärmeübertragungsrohres 3 eine optische Länge der Messstrecke ändert. Die Referenzfaser R ist schwingungsentkoppelt mit dem Wärmeübertragungsrohr 3 verbunden, sodass eine optische Länge der Referenzstrecke nicht wesentlich durch die elastische Schwingung des Wärmeübertragungsrohres 3 beeinflusst wird. Der optische Sensor 2 weist einen Laser als elektromagnetische Emissionsquelle L auf, um mit dem Laser eine elektromagnetische Welle in die Messfaser M als elektromagnetische Messwelle und in die Referenzwelle als elektromagnetische Referenzwelle einzubringen. Eine Änderung der Länge der Messstrecke kann einen Gangunterschied zwischen der Messwelle und Referenzwelle erzeugen, sodass die elastische Schwingung, insbesondere eine Eigenfrequenz der elastischen Schwingung, mit Herstellung einer Interferenz der Messwelle und der Referenzwelle zur Bildung eines Interferenzsignals mit einem Detektor PD des faseroptischen Sensors 2 detektierbar bzw. messbar ist. Die Messfaser M und die Referenzfaser R weisen an deren Faserende jeweils ein Reflexionselement auf, um die Messwelle bzw. Reflexionswelle wieder entlang der Messfaser M bzw. Referenzfaser R zurück zu reflektieren. Die Messfaser M und Referenzfaser R sind an einer Koppelstelle miteinander gekoppelt, um ein Interferenzsignal mit der Messwelle und Referenzwelle zu bilden. Der Interaktionsabschnitt 21 der Messfaser M und der Interaktionsabschnitt 21 der Referenzfaser R sind innerhalb der Fluidkammer 4, insbesondere des Fluidkammerhohlraums 5, mit dem jeweiligen Wärmeübertragungsrohr 3 verbunden und die Messfaser M und Referenzfaser R durch eine Fluidkammerwand der Fluidkammer 4 nach außen geführt, um das Interferenzsignal außerhalb der Fluidkammer 4 mit dem Detektor PD zu messen. Detektoren PD und elektromagnetische Emissionsquelle L befinden sich außerhalb der Fluidkammer 4 bzw. dem Fluidkammerhohlraum 5, üblicherweise innerhalb eines Sensorgehäuses 9. Die Messfaser M und Referenzfaser R sind üblicherweise mit einer oder mehreren Faserdurchführungen 8 fluiddicht durch die Fluidkammerwand hindurchgeführt. Die faseroptischen Sensoren 2 können mit einer, insbesondere gemeinsamen, elektronischen Datensammeleinheit 18 zur Datenübertragung, üblicherweise über elektrische Datenleitungen 10, verbunden sein. Die elektronische Datensammeleinheit 18 kann beispielsweise ein elektronisches Datenverarbeitungssystem sein. Um hohen Temperaturen und/oder hohen Drücken im Wärmetauscher 1 zu widerstehen, ist es günstig, wenn die Messfaser M und die Referenzfaser R innerhalb der Fluidkammer 4 vorzugsweise jeweils innerhalb eines Schutzmantels, welcher als auf die Messfaser M bzw. die Referenzfaser R aufgebrachte Beschichtung ausgebildet sein kann, verlaufen. Um Längen von Messfasern M und Referenzfasern R kurz zu halten, ist es günstig, wenn mehrere separate faseroptische Sensoren 2 vorhanden sind, welche insbesondere jeweils ein eigenes Sensorgehäuse 9 bzw. eine eigene elektromagnetische Emissionsquelle L aufweisen.

In der Regel erstrecken sich die Wärmeübertragungsrohre 3 jeweils zwischen einer ersten Rohrplatte 11 und einer zweiten Rohrplatte 12, wobei die Rohrplatten als Teil von Fluidkammerwänden der Fluidkammer 4 ausgeführt sind bzw. den Fluidkammerhohlraum 5 begrenzen. Das jeweilige Wärmeübertragungsrohr 3 ist durch die erste Rohrplatte 11 und die zweite Rohrplatte 12 hindurchgeführt. Die Fluidkammer 4 weist mehrere Stabilisierungselemente 13, üblicherweise bezeichnet als Baffles auf, welche mehrere der Wärmeübertragungsrohre 3 miteinander verbinden, um mit den Stabilisierungselementen 13 die Wärmeübertragungsrohre 3 im Betrieb des Wärmetauschers 1 zu stabilisieren. Vorteilhaft ist es, wenn die Interaktionsabschnitte 21 von Messfaser M und Referenzfaser R des jeweiligen faseroptischen Sensors 2 in einem Anordnungsbereich am jeweiligen Wärmeübertragungsrohr 3 angeordnet ist, welcher Anordnungsbereich in Durchströmungsrichtung des ersten Fluids F1 durch das Wärmeübertragungsrohr 3 in einem ersten Drittel und/oder in einem zweiten Drittel einer Längserstreckung des Wärmeübertragungsrohres 3 innerhalb der Fluidkammer 4 bzw. des Fluidkammerhohlraums 5 liegt. Bevorzugt sind die Interaktionsabschnitte 21 von Messfaser M und Referenzfaser R in Durchströmungsrichtung des ersten Fluids F1 durch das Wärmeübertragungsrohr 3 zwischen der ersten Rohrplatte 11 und einem ersten der Stabilisierungselemente 13 mit dem Wärmeübertragungsrohr 3 verbunden.

Fig. 2 zeigt eine schematische Darstellung eines Aufbaus eines faseroptischen Sensors 2 der Fig. 1, welcher am jeweiligen Wärmeübertragungsrohr 3 angeordnet ist. Der faseroptische Sensor 2 weist einen optischen Koppler 19 auf, welcher die Koppelstelle bildet, um die Messfaser M und Referenzfaser R zur Bildung eines Interferenzsignals miteinander zu koppeln. Der optische Koppler 19 weist mehrere, beispielsweise drei, Eingänge und mehrere, beispielsweise zwei, Ausgänge auf. Die elektromagnetische Emissionsquelle L ist mit einem der Eingänge verbunden und die Messfaser M und die Referenzfaser R sind jeweils mit einem der Ausgänge verbunden, sodass eine mit der elektromagnetischen Emissionsquelle L erzeugte elektromagnetische Welle, insbesondere in einer Einspeiserichtung S, in die Messfaser M als Messwelle und in die Referenzfaser R als Referenzwelle weitergeleitet wird. Mit mehreren weiteren der Eingänge ist jeweils ein Detektor PD verbunden, sodass eine über die Messfaser M zurückreflektierte Messwelle und eine über die Referenzfaser R zurückreflektierte Referenzwelle als Interferenzsignal an den weiteren Eingängen mit dem jeweiligen Detektor PD detektierbar ist. In der Regel sind die Eingänge und Ausgänge des optischen Kopplers 19 derart miteinander geschaltet, dass eine über einen der Eingänge eingeleitete elektromagnetische Welle auf die Ausgänge verteilt weitergeleitet wird und eine über einen der Ausgänge eingeleitete elektromagnetische Welle auf die Eingänge verteilt weitergleitet wird. Auf diese Weise kann mit den Detektoren PD ein zur elastischen Schwingung, insbesondere Eigenfrequenz, des Wärmeübertragungsrohres 3 korrespondierendes Interferenzsignal gemessen werden. Die Detektoren PD sind üblicherweise als Photodioden ausgebildet. Die Detektoren PD sind üblicherweise mit einer elektronischen Datenerfassungseinheit 17 zur Datenübertragung, meist über elektrische Datenleitungen 10, verbunden. Die elektronische Datenerfassungseinheit 17 kann mit der elektronischen Datensammeleinheit 18 zur Datenübertragung verbunden sein. Zwischen der elektromagnetischen Emissionsquelle L und dem optischen Koppler 19 kann ein optischer Isolator 14 angeordnet sein, um Rückreflexionen einer mit der elektromagnetischen Emissionsquelle L dem optischen Koppler 19 zugeführten elektromagnetischen Welle zu minimieren. Die elektromagnetische Emissionsquelle L ist üblicherweise mit einer elektrischen Steuereinheit 15 zur Steuerung der Emissionsquelle L elektrisch verbunden. Zwischen dem jeweiligen Detektor PD und der elektronischen Datenerfassungseinheit 17 kann elektrischer Verstärker 16, insbesondere Transimpedanzverstärker, angeordnet sein, um ein mit dem Detektor PD detektiertes Interferenzsignal zu verstärken. An unterschiedlichen der Wärmeübertragungsrohre 3 kann jeweils ein derart ausgebildeter faseroptischer Sensor 2 zur Bestimmung einer Rohrwanddicke des jeweiligen Wärmeübertragungsrohres 3 angeordnet sein.

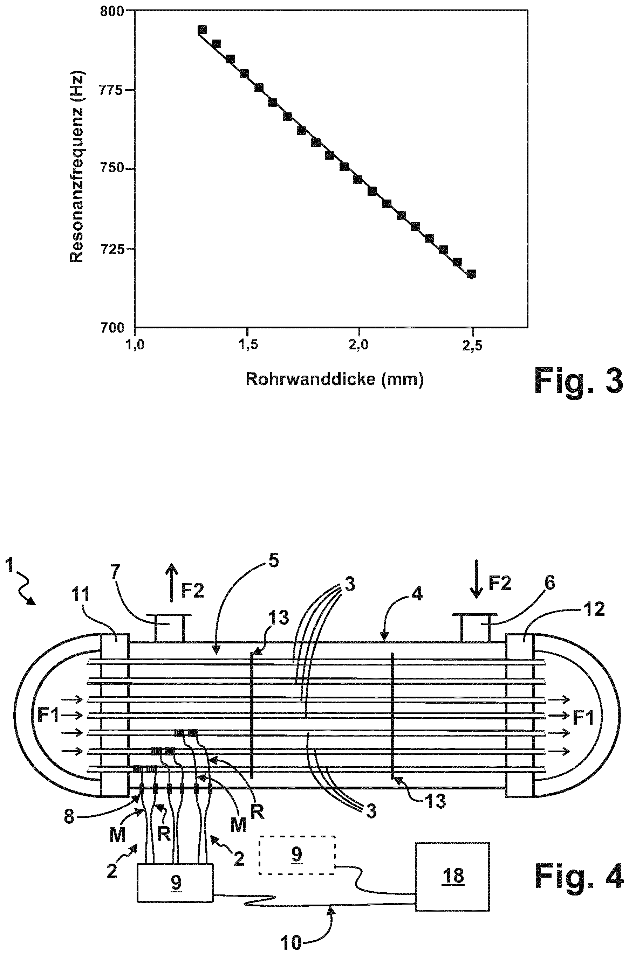

Fig. 3 zeigt einen Graphen, welcher exemplarisch einen Zusammenhang zwischen einer gemessenen Resonanzfrequenz bzw. Eigenfrequenz einer elastischen Schwingung eines Wärmeübertragungsrohres 3 und einer Rohrwanddicke einer Rohrwand des Wärmeübertragungsrohres 3 zeigt. Ein linearer Zusammenhang zwischen der Resonanzfrequenz und Rohrwanddicke ist durch eine Fitgerade dargestellt. Es können mehrere Resonanzfrequenzen bzw. Eigenfrequenzen zur Bestimmung der Rohrwanddicke ermittelt werden.

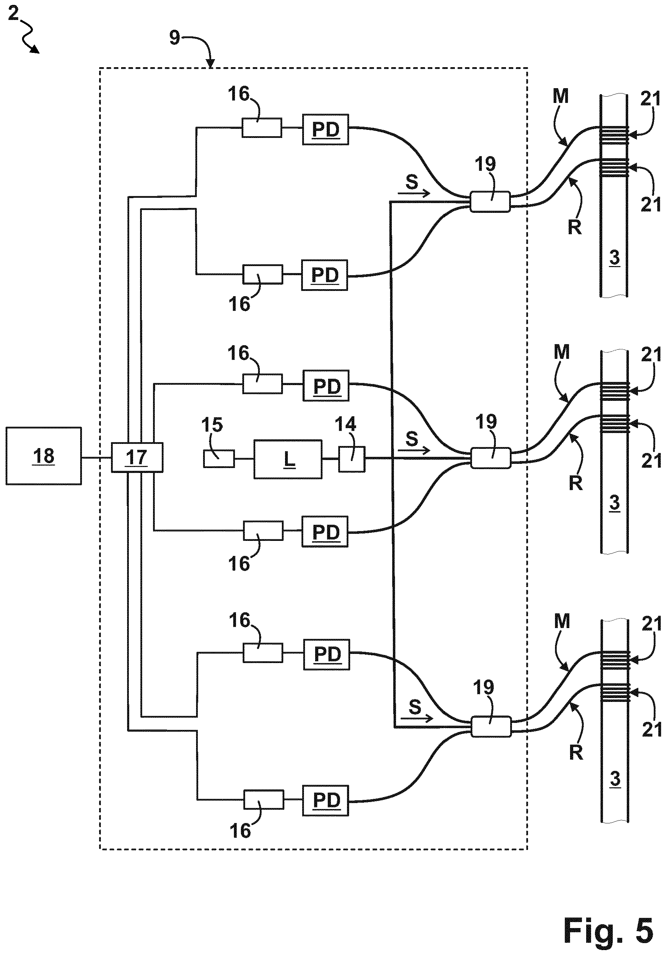

Fig. 4 zeigt eine schematische Darstellung eines weiteren Wärmetauschers 1 mit mehreren faseroptischen Sensoren 2. Der Wärmetauscher 1 kann entsprechend den Erläuterungen zum Wärmetauscher 1 der Fig. 1 ausgebildet sein. Im Unterschied zu den faseroptischen Sensoren 2 des Wärmetauschers 1 der Fig. 1 weisen die faseroptischen Sensoren 2 gemäß Fig. 4 eine gemeinsame elektromagnetische Emissionsquelle L in Form eines Lasers auf. Dies ist in Fig. 5 dargestellt. Fig. 5 zeigt eine schematische Darstellung von an verschiedenen Wärmeübertragungsrohren 3 angeordneten faseroptischen Sensoren 2 mit gemeinsamer elektromagnetischer Emissionsquelle L. Die einzelnen faseroptischen Sensoren 2 der Fig. 5 können entsprechend dem faseroptischen Sensor 2 der Fig. 2 aufgebaut sein. Im Unterschied zur Fig. 2 sind die optischen Koppler 19 der jeweiligen faseroptischen Sensoren 2 der Fig. 5 mit der gemeinsamen elektromagnetischen Emissionsquelle L über eine optische Einspeisefaser gekoppelt, um eine mit der elektromagnetischen Emissionsquelle L erzeugte elektromagnetische Welle auf die optischen Koppler 19 aufgeteilt den optischen Kopplern 19 zuzuführen. Die Einspeisefaser weist einen Hauptzweig und mehrere vom Hauptzweig abzweigende Nebenzweige auf, um eine mit der elektromagnetischen Emissionsquelle L in den Hauptzweig eingeleitete elektromagnetische Welle auf die Nebenzweige aufgeteilt zu einem Eingang des jeweiligen optischen Kopplers 19 zu führen. Weiter können die einzelnen faseroptischen Sensoren 2 eine gemeinsame elektronische Datenerfassungseinheit 17 aufweisen, mit welcher die Detektoren PD der faseroptischen Sensoren 2 zur Datenübertragung verbunden sind.

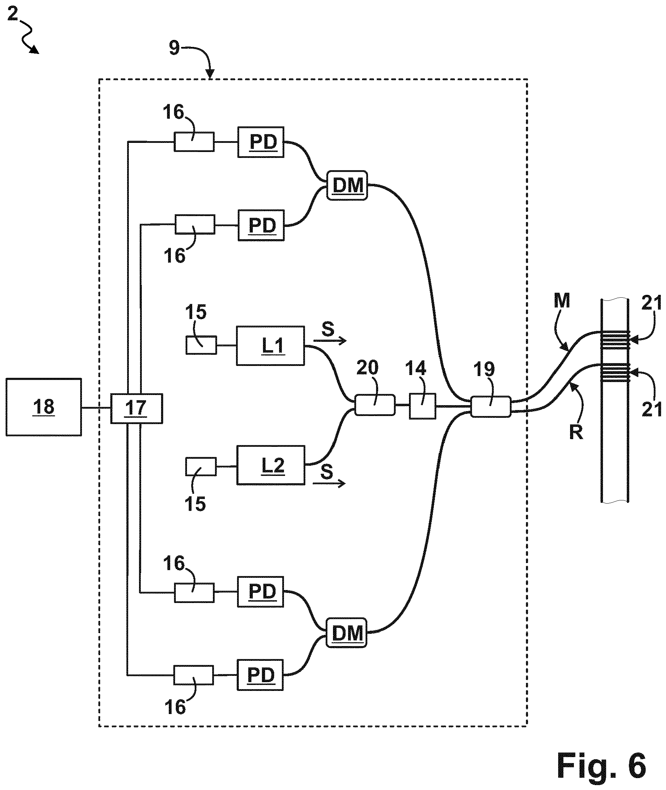

Fig. 6 zeigt eine schematische Darstellung eines weiteren faseroptischen Sensors 2, welcher an einem Wärmeübertragungsrohr 3 angeordnet ist. Der faseroptische Sensor 2 kann ein faseroptischer Sensor 2 des Wärmetauschers 1 der Fig. 1 sein bzw. gemäß den Merkmalen des faseroptischen Sensors 2 der Fig. 2 ausgebildet sein. Im Unterschied zum faseroptischen Sensor 2 der Fig. 2 weist der faseroptische Sensor 2 der Fig. 6 zwei elektromagnetische Emissionsquellen L unterschiedlicher Wellenlänge und unterschiedlicher Kohärenzlänge deren elektromagnetischer Wellen auf. Beispielsweise kann eine der elektromagnetischen Emissionsquellen L ein Laser mit einer Laserlichtwellenlänge von 1300 nm und die andere elektromagnetische Emissionsquelle L ein Laser mit einer Laserlichtwellenlänge von 1550 nm sein. Einer der Laser kann eine Kohärenzlänge zwischen 0,5 mm und 10 mm, beispielsweise etwa 5 mm, und der andere Laser eine Kohärenzlänge zwischen 10 µm und 500 µm, beispielsweise etwa 30 µm, aufweisen. Die beiden elektromagnetischen Emissionsquellen L1, L2 sind mit einer optischen Koppeleinheit 20 gekoppelt, üblicherweise jeweils mit einer Eingangsleitung der optischen Koppeleinheit 20 verbunden, sodass mit den elektromagnetischen Emissionsquellen L erzeugte elektromagnetische Wellen auf einer gemeinsamen optischen Ausgangsleitung der optischen Koppeleinheit 20 einander überlagert ausgegeben werden. Die Ausgangsleitung der optischen Koppeleinheit 20 ist zur Weiterleitung der elektromagnetischen Wellen mit einem Eingang des optischen Kopplers 19 verbunden, um die elektromagnetischen Wellen über den optischen Koppler 19 der Messfaser M und Referenzfaser R zuzuführen. Zwischen der optischen Koppeleinheit 20 und dem optischen Koppler 19 kann ein optischer Isolator 14 zur Minimierung von Rückreflexionen angeordnet sein.

Auf diese Weise können über die Messfaser M bzw. entlang der Messstrecke einander überlagerte Messwellen unterschiedlicher Wellenlänge und unterschiedlicher Kohärenzlänge und über die Referenzfaser R bzw. entlang der Referenzstrecke einander überlagerte Referenzwellen unterschiedlicher Wellenlänge und unterschiedlicher Kohärenzwellen eingesetzt werden. Entsprechend ergeben sich an den weiteren Eingängen des optischen Kopplers 19, mit welchen Detektoren PD zur Detektion von Interferenzsignalen verbunden sind, als Folge von entlang der Messfaser M rückreflektierten Messwellen und entlang der Referenzfaser R rückreflektierten Referenzwellen zwei einander überlagerte Interferenzsignale für eine Detektion mit den Detektoren PD. Zwischen den Detektoren PD und den jeweiligen Eingängen des optischen Kopplers 19 ist jeweils ein wellenlängenselektiver Demultiplexer DM angeordnet, um die Interferenzsignale von elektromagnetischen Wellen unterschiedlicher Wellenlänge an unterschiedlichen Ausgängen des Demultiplexers DM auszugeben. Mit den Ausgängen des jeweiligen Demultiplexers DM ist jeweils ein Detektor PD zu Messung des Interferenzsignals verbunden. Auf diese Weise können zwei unterschiedliche Interferenzsignale zeitparallel detektiert werden. Aufgrund der unterschiedlichen Kohärenzlängen ergeben sich Interferenzsignale unterschiedlicher Form. Dies ermöglicht eine besonders genaue Bestimmung der Eigenfrequenz bzw. Rohrwanddicke. Die Detektoren PD können mit einer gemeinsamen elektronischen Datenerfassungseinheit 17 zur Datenübertragung verbunden sein.

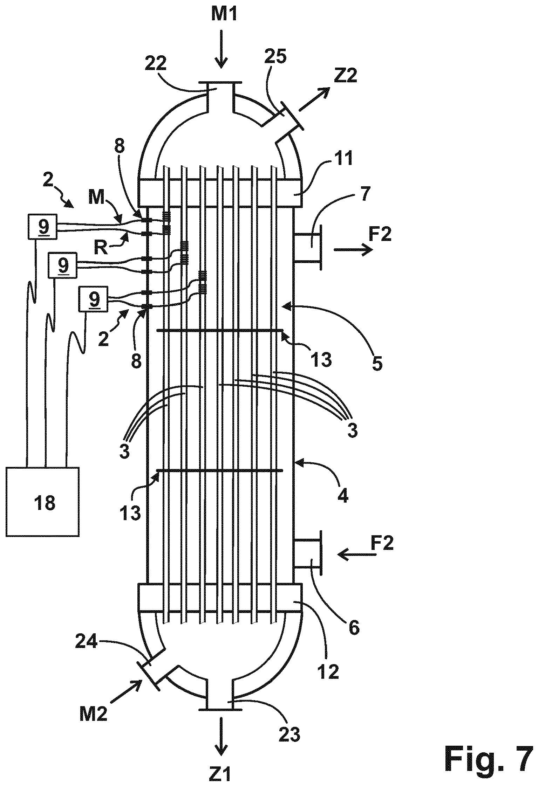

Fig. 7 zeigt eine schematische Darstellung eines weiteren Wärmetauschers 1, welcher als Stripper zur Strippung ausgebildet ist, wobei an mehreren Wärmeübertragungsrohren 3 des Wärmetauschers 1 faseroptische Sensoren 2 zur Rohrwanddickenbestimmung der Wärmeübertragungsrohre 3 angeordnet sind. Üblicherweise wird ein solcher Wärmetauscher 1 zur Harnstoffsynthese eingesetzt. Der Wärmetauscher 1 kann entsprechend den Erläuterungen zu den Wärmetauschern 1 bzw. faseroptischen Sensoren 2 der Fig. 1 bis Fig. 6 ausgebildet sein bzw. entsprechende faseroptische Sensoren 2 aufweisen. Der Wärmetauscher 1 ist üblicherweise derart ausgerichtet, dass eine Längserstreckung der Wärmeübertragungsrohre 3 im Wesentlichen vertikal ausgerichtet ist. Zur Harnstoffsynthese ist vorgesehen, dass das erste Fluid F1 mit bzw. aus einem ersten Medium M1 und einem zweiten Medium M2 gebildet ist, wobei innerhalb der Fluidkammer 4 bzw. des Fluidkammerhohlraums 5 das erste Medium M1 und zweite Medium M2 in einander entgegengesetzten Durchströmungsrichtungen durch das jeweilige Wärmeübertragungsrohr 3 strömen. In der Regel ist das erste Medium M1 mit, insbesondere aus, Harnstoff, Ammoniumcarbamat und Ammoniak und das zweite Medium M2 mit, insbesondere aus, gasförmigen Kohlenstoffdioxid (CO2) gebildet. Der Wärmetauscher 1 bzw. Stripper weist in der Regel eine Mehrzahl, insbesondere mehr als 10, bevorzugt mehr als 50, insbesondere bevorzugt mehr als 100, besonders bevorzugt mehr als 1000, Wärmeübertragungsrohre 3 auf. Der Wärmetauscher 1 ist üblicherweise derart ausgerichtet, dass sich die erste Rohrplatte 11 in vertikaler Richtung über der zweiten Rohrplatte 12 befindet. Bevorzugt befindet sich der jeweilige faseroptische Sensor 2 zwischen der ersten Rohrplatte 11 und einem ersten der Stabilisierungselemente 13.

Der Wärmetauscher 1 weist einen ersten Einlass 22, über welchen das erste Medium M1 in die Wärmeübertragungsrohre 3 zuführbar ist, und einen zweiten Einlass 24, über welchen das zweite Medium M2 in die Wärmeübertragungsrohre 3 zuführbar ist, auf, sodass innerhalb der Fluidkammer 4 bzw. dem Fluidkammerhohlraum 5 die Medien M1, M2 mit einander entgegenstehenden Durchströmungsrichtungen durch die Wärmeübertragungsrohre 3 fließen, um miteinander zu reagieren. Der erste Einlass 22 und der zweite Einlass 24 sind in Bezug auf den Fluidkammerhohlraum 5 an unterschiedlichen Enden der Wärmeübertragungsrohre 3 mit den Wärmeübertragungsrohren 3 fluidleitend verbunden. Hierzu kann der erste Einlass 22 und der zweite Einlass 24 jeweils mit einer Fluidverteilungskammer fluidleitendverbunden sein, wobei jeweils Enden der Wärmeübertragungsrohre 3 fluidleitend mit der Fluidverteilungskammer verbunden sind, sodass über den ersten Einlass 22 bzw. zweiten Einlass 24 in die jeweilige Fluidverteilungskammer zugeführtes erstes Medium M1 bzw. zweites Medium M2 auf die Wärmeübertragungsrohre 3 verteilt in die Wärmeübertragungsrohre 3 eingeleitet wird. Der Wärmetauscher 1 weist einen ersten Auslass 23, über welchen ein erstes Produkt Z1 aus den Wärmeübertragungsrohren 3 abführbar ist, und einen zweiten Auslass 25, über welchen ein zweites Produkt Z2 aus den Wärmeübertragungsrohren 3 abführbar ist, auf, wobei der erste Auslass 23 und zweite Auslass 25 in Bezug auf den Fluidkammerhohlraum 5 an unterschiedlichen Enden der Wärmeübertragungsrohre 3 mit den Wärmeübertragungsrohren 3 fluidleitend verbunden sind, vorzugsweise indem der erste Auslass 23 und zweite Auslass 25 jeweils mit einer der Fluidverteilungskammern fluidleitend verbunden ist, sodass ein aus den Wärmeübertragungsrohren 3 austretendes erstes Produkt Z1 bzw. zweites Produkt Z2 über den jeweiligen Auslass 23, 25 abführbar ist. Das erste Produkt Z1 ist üblicherweise Harnstoff, insbesondere in hoher Reinheit. Das zweite Produkt Z2 ist üblicherweise gasförmiges Ammoniak (NH3) und/oder gasförmiges Kohlenstoffdioxid (CO2). Das zweite Fluid F2 ist in der Regel mit, insbesondere aus, flüssigem und/oder gasförmigem Wasser gebildet.

Wenn an einem oder mehreren der Wärmeübertragungsrohre 3 des Wärmetauschers 1 jeweils ein faseroptischer Sensor 2 angeordnet ist, welcher ausgebildet ist, während eines Betriebs des Wärmetauschers 1 interferometrisch Eigenfrequenzen bzw. Resonanzfrequenz einer elastischen Schwingung des jeweiligen Wärmeübertragungsrohres 3 zu ermitteln, kann eine Rohrdicke des jeweiligen Wärmeübertragungsrohres 3 praktikabel während eines Betriebs des Wärmetauschers 1 bestimmt werden. Vorzugsweise ist der faseroptische Sensor 2 derart ausgebildet, dass Messfaser M und Referenzfaser R bei einem Einsatzdruck von mehr als 30 bar, insbesondere zwischen 30 bar und 200 bar, und/oder einer Einsatztemperatur von mehr als 80 C, insbesondere zwischen 80°C und 300°C, eingesetzt werden können bzw. am jeweiligen Wärmeübertragungsrohr 3 angeordnet werden können. Dies ermöglich eine optimierte Einsatzfähigkeit des Wärmetauschers 1.

## Patentansprüche

1. Wärmetauscher (1), insbesondere Hochdruckwärmetauscher zur Harnstoffsynthese, aufweisend mehrere Wärmeübertragungsrohre (3) zum Transport eines ersten Fluids (F1), um über die Wärmeübertragungsrohre (3) Wärme zwischen dem ersten Fluid (F1) und einem zweiten Fluid (F2) zu übertragen, **dadurch gekennzeichnet, dass** an einem oder mehreren der Wärmeübertragungsrohre (3) jeweils ein faseroptischer Sensor (2) angeordnet ist, wobei der faseroptische Sensor (2) ausgebildet ist, während eines Betriebs des Wärmetauschers (1) interferometrisch eine elastische Schwingung, insbesondere Eigenschwingung, des jeweiligen Wärmeübertragungsrohres (3) zu ermitteln, um während des Betriebs des Wärmetauschers (1) eine Rohrwanddicke des jeweiligen Wärmeübertragungsrohres (3) zu bestimmen.

2. Wärmetauscher (1) nach Anspruch 1, **dadurch gekennzeichnet, dass** der faseroptische Sensor (2) eine optische Messfaser (M), welche eine Messstrecke bildet, und eine optische Referenzfaser (R), welche eine Referenzstrecke bildet, aufweist, wobei die Messfaser (M) schwingungsübertragend mit dem Wärmeübertragungsrohr (3) verbunden, bevorzugt um das Wärmeübertragungsrohr (3) gewickelt, ist, um mit einem Detektor (PD) des faseroptischen Sensors (2) ein mit einer entlang der Messstrecke geführten elektromagnetischen Welle und einer entlang der Referenzstrecke geführten elektromagnetischen Welle gebildetes Interferenzsignal zu detektieren.

3. Wärmetauscher (1) nach Anspruch 2, **dadurch gekennzeichnet, dass** die Referenzfaser (R) schwingungsentkoppelt mit dem Wärmeübertragungsrohr (3) verbunden, bevorzugt um das Wärmeübertragungsrohr (3) gewickelt, ist.

4. Wärmetauscher (1) nach Anspruch 2 oder 3, **dadurch gekennzeichnet, dass** der Wärmetauscher (1) eine Fluidkammer (4) zur Aufnahme des zweiten Fluids (F2) aufweist, wobei die Wärmeübertragungsrohre (3) innerhalb der Fluidkammer (4) verlaufen und die Messfaser (M) innerhalb der Fluidkammer (4) mit dem Wärmeübertragungsrohr (3) schwingungsübertragend verbunden ist, wobei ein Detektor (PD) des faseroptischen Sensors (2) zur Detektion des Interferenzsignals außerhalb der Fluidkammer (4) angeordnet ist.

5. Wärmetauscher (1) nach einem der Ansprüche 2 bis 4, **dadurch gekennzeichnet, dass** der faseroptische Sensor (2) eine elektromagnetische Emissionsquelle (L), bevorzugt einen Laser, zur Erzeugung elektromagnetischer Wellen aufweist, wobei die Emissionsquelle (L) mit der Messfaser (M) und der Referenzfaser (R) gekoppelt ist, um elektromagnetische Wellen in die Messfaser (M) und die Referenzfaser (R) einzubringen.

6. Wärmetauscher (1) nach einem der Ansprüche 2 bis 5, **dadurch gekennzeichnet, dass** die Messfaser (M) und die Referenzfaser (R) jeweils ein Reflexionselement aufweisen oder an ein solches anschließen, um eine entlang der Messstrecke bzw. Referenzstrecke geleitete elektromagnetische Welle mit dem Reflexionselement zu reflektieren.

7. Wärmetauscher (1) nach einem der Ansprüche 2 bis 6, **dadurch gekennzeichnet, dass** die Messfaser (M) und die Referenzfaser (R) an einer Koppelstelle miteinander gekoppelt sind, um mit einer entlang der Messstrecke übertragenen elektromagnetischen Welle und einer entlang der Referenzstrecke übertragenen elektromagnetischen Welle ein Interferenzsignal bilden.

8. Wärmetauscher (1) nach einem der Ansprüche 2 bis 7, **dadurch gekennzeichnet, dass** der faseroptische Sensor (2) einen optischen Koppler (19) mit mehreren Eingangsleitungen und mehreren Ausgangsleitungen aufweist, wobei die Eingangsleitungen und die Ausgangsleitungen zur verteilten Übertragung von elektromagnetischen Wellen miteinander verbunden sind, wobei die elektromagnetische Emissionsquelle (L) mit einer der Eingangsleitungen verbunden ist und die Messfaser (M) und die Referenzfaser (R) jeweils mit einer der Ausgangsleitungen verbunden sind, sodass eine mit der Emissionsquelle (L) in die Eingangsleitung eingebrachte elektromagnetische Welle über die Ausgangsleitungen in die Messfaser (M) und die Referenzfaser (R) eingeleitet wird.

9. Wärmetauscher (1) nach Anspruch 8, **dadurch gekennzeichnet, dass** mit einer oder mehreren der Eingangsleitungen jeweils ein Detektor (PD), bevorzugt gebildet mit einer Photodiode, verbunden ist, um ein entlang der Messfaser (M) und Referenzfaser (R) jeweils in die Ausgangsleitung zurückreflektierte elektromagnetische Welle an den Eingangsleitungen mit dem jeweiligen Detektor (PD) als Interferenzsignal zu detektieren.

10. Wärmetauscher (1) nach einem der Ansprüche 2 bis 9, **dadurch gekennzeichnet, dass** die Messfaser (M) im Betrieb des Wärmetauschers (1) zumindest abschnittsweise durch das zweite Fluid (F2) hindurch verläuft, wobei der faseroptische Sensor (2) derart ausgebildet ist, dass die Messfaser (M) bzw. die Referenzfaser (R) bei einem Einsatzdruck von mehr als 30 bar und/oder einer Einsatztemperatur von mehr als 80 °C einsetzbar ist.

11. Wärmetauscher (1) nach einem der Ansprüche 2 bis 10, **dadurch gekennzeichnet, dass** die Messfaser (M) bzw. die Referenzfaser (R) zum Schutz vor einem Umgebungsdruck und/oder einer Umgebungstemperatur zumindest abschnittsweise innerhalb eines Schutzmantels, vorzugsweise gebildet mit Metall oder Polyimid, verläuft.

12. Verfahren zum Betreiben eines Wärmetauschers (1), insbesondere eines Wärmetauschers (1) nach einem der Ansprüche 1 bis 11, **dadurch gekennzeichnet, dass** an einem oder mehreren Wärmeübertragungsrohren (3), mit welchen ein erstes Fluid (F1) transportiert wird, um über die Wärmeübertragungsrohre (3) Wärme zwischen dem ersten Fluid (F1) und einem zweiten Fluid (F2) zu übertragen, jeweils ein faseroptischer Sensor (2) angeordnet ist, wobei mit dem faseroptischen Sensor (2) während eines Betriebs des Wärmetauschers (1) interferometrisch eine elastische Schwingung, insbesondere Eigenschwingung, des jeweiligen Wärmeübertragungsrohres (3) ermittelt wird, um während des Betriebs des Wärmetauschers (1) eine Rohrwanddicke des jeweiligen Wärmeübertragungsrohres (3) zu bestimmen.

13. Verfahren nach Anspruch 12, **dadurch gekennzeichnet, dass** der faseroptische Sensor (2) eine optische Messfaser (M), welche eine Messstrecke bildet, und eine optische Referenzfaser (R), welche eine Referenzstrecke bildet, aufweist, wobei die Messfaser (M) schwingungsübertragend mit dem Wärmeübertragungsrohr (3) verbunden ist, wobei mit Detektion eines Interferenzsignals von einer entlang der Messstrecke geführten elektromagnetischen Welle und einer entlang der Referenzstrecke geführten elektromagnetischen Welle eine elastische Schwingung des Wärmeübertragungsrohres (3) ermittelt wird.

14. Verfahren nach Anspruch 13, **dadurch gekennzeichnet, dass** die mit der Messfaser (M) bzw. Referenzfaser (R) geführte elektromagnetische Welle eine Kohärenzlänge von mehr als 2 mm, insbesondere mehr als 5 mm, aufweist.

15. Verfahren nach einem der Ansprüche 12 bis 14, **dadurch gekennzeichnet, dass** das zweite Fluid (F2) einen Druck von mehr als 30 bar, insbesondere zwischen 30 bar und 200 bar, vorzugsweise etwa 180 bar, aufweist und/oder eine Temperatur von mehr als 80 °C, insbesondere zwischen 80 °C und 300°C, vorzugsweise etwa 230 °C, aufweist.

## Claims

1. Heat exchanger (1), in particular a high-pressure heat exchanger for urea synthesis, comprising a plurality of heat-transfer tubes (3) for transporting a first fluid (F1) in order to transfer heat between the first fluid (F1) and a second fluid (F2) via the heat-transfer tubes (3), **characterized in that** a fibre-optic sensor (2) is respectively arranged on one or more of the heat-transfer tubes (3), wherein the fibre-optic sensor (2) is designed to interferometrically determine an elastic oscillation, in particular an eigen oscillation, of the respective heat-transfer tube (3) during an operation of the heat exchanger (1) in order to determine a tube wall thickness of the respective heat-transfer tube (3) during an operation of the heat exchanger (1).

2. The heat exchanger (1) according to claim 1, **characterized in that** the fibre-optic sensor (2) comprises an optical measurement fibre (M), which forms a measurement path, and an optical reference fibre (R), which forms a reference path, wherein the measurement fibre (M) is connected to the heat-transfer tube (3) in a vibration-transmitting manner, preferably wound around the heat-transfer tube (3), in order to detect with a detector (PD) of the fibre-optic sensor (2) an interference signal formed by an electromagnetic wave guided along the measurement path and an electromagnetic wave guided along the reference path.

3. The heat exchanger (1) according to claim 2, **characterized in that** the reference fibre (R) is connected to the heat-transfer tube (3) in a vibration-decoupled manner, preferably wound around the heat-transfer tube (3).

4. The heat exchanger (1) according to claim 2 or 3, **characterized in that** the heat exchanger (1) comprises a fluid chamber (4) for receiving the second fluid (F2), wherein the heat-transfer tubes (3) extend inside the fluid chamber (4) and the measurement fibre (M) is connected to the heat-transfer tube (3) in a vibration-transmitting manner inside the fluid chamber (4), wherein a detector (PD) of the fibre-optic sensor (2) for detecting the interference signal is arranged outside the fluid chamber (4).

5. The heat exchanger (1) according to one of claims 2 to 4, **characterized in that** the fibre-optic sensor (2) comprises an electromagnetic emission source (L), preferably a laser, for generating electromagnetic waves, wherein the emission source (L) is coupled to the measurement fibre (M) and to the reference fibre (R) in order to introduce electromagnetic waves into the measurement fibre (M) and the reference fibre (R).

6. The heat exchanger (1) according to one of claims 2 to 5, **characterized in that** the measurement fibre (M) and the reference fibre (R) respectively comprise a reflection element or are connected to such an element in order to reflect an electromagnetic wave conducted along the measurement path or reference path using the reflection element.

7. The heat exchanger (1) according to one of claims 2 to 6, **characterized in that** the measurement fibre (M) and the reference fibre (R) are coupled to each other at a coupling point in order to form an interference signal with an electromagnetic wave transmitted along the measurement path and an electromagnetic wave transmitted along the reference path.

8. The heat exchanger (1) according to one of claims 2 to 7, **characterized in that** the fibre-optic sensor (2) comprises an optical coupler (19) with a plurality of input lines and a plurality of output lines, wherein the input lines and the output lines are connected to one another for a distributed transmission of electromagnetic waves, wherein the electromagnetic emission source (L) is connected to one of the input lines and the measurement fibre (M) and the reference fibre (R) are respectively connected to one of the output lines, so that an electromagnetic wave introduced into the input line by the emission source (L) is introduced into the measurement fibre (M) and the reference fibre (R) via the output lines.

9. The heat exchanger (1) according to claim 8, **characterized in that** a detector (PD), preferably formed with a photodiode, is respectively connected to one or more of the input lines in order to detect a respective electromagnetic wave that is reflected back along the measurement fibre (M) and reference fibre (R) into the output line at the input lines with the respective detector (PD) as an interference signal.

10. The heat exchanger (1) according to one of claims 2 to 9, **characterized in that** the measurement fibre (M) runs at least in sections through the second fluid (F2) when the heat exchanger (1) is in operation, wherein the fibre-optic sensor (2) is designed in such a manner that the measurement fibre (M) or the reference fibre (R) can be employed at an operating pressure of more than 30 bar and/or an operating temperature of more than 80 °C.

11. The heat exchanger (1) according to one of claims 2 to 10, **characterized in that** the measurement fibre (M) or the reference fibre (R) extends at least in sections inside a protective sheath, preferably formed with metal or polyimide, for protection against an ambient pressure and/or an ambient temperature.

12. Method for operating a heat exchanger (1), in particular a heat exchanger (1) according to one of claims 1 to 11, **characterized in that** a fibre-optic sensor (2) is respectively arranged on one or more heat-transfer tubes (3) with which a first fluid (F1) is transported in order to transfer heat between the first fluid (F1) and a second fluid (F2) via the heat-transfer tubes (3), wherein an elastic oscillation, in particular an eigen oscillation, of the respective heat-transfer tube (3) is determined interferometrically with the fibre-optic sensor (2) during an operation of the heat exchanger (1) in order to determine a tube wall thickness of the respective heat-transfer tube (3) during an operation of the heat exchanger (1).

13. The method according to claim 12, **characterized in that** the fibre-optic sensor (2) comprises an optical measurement fibre (M), which forms a measurement path, and an optical reference fibre (R), which forms a reference path, wherein the measurement fibre (M) is connected to the heat-transfer tube (3) in a vibration-transmitting manner, wherein an elastic oscillation of the heat-transfer tube (3) is determined by detecting an interference signal from an electromagnetic wave guided along the measurement path and an electromagnetic wave guided along the reference path.

14. The method according to claim 13, **characterized in that** the electromagnetic wave guided by the measurement fibre (M) or reference fibre (R) has a coherence length of more than 2 mm, in particular more than 5 mm.

15. The method according to one of claims 12 to 14, **characterized in that** the second fluid (F2) has a pressure of more than 30 bar, in particular between 30 bar and 200 bar, preferably about 180 bar, and/or has a temperature of more than 80°C, in particular between 80°C and 300°C, preferably about 230°C.

## Revendications

1. Échangeur de chaleur (1), en particulier échangeur de chaleur à haute pression pour la synthèse d'urée, comprenant plusieurs tubes de transfert de chaleur (3) pour le transport d'un premier fluide (F1), afin de transférer de la chaleur entre le premier fluide (F1) et un second fluide (F2) par l'intermédiaire des tubes de transfert de chaleur (3), **caractérisé en ce qu'**un ou plusieurs des tubes de transfert de chaleur (3) sont chacun équipés d'un capteur à fibre optique (2), le capteur à fibre optique (2) étant constitué pour déterminer interférométrie, pendant le fonctionnement de l'échangeur de chaleur (1), une vibration élastique, en particulier une vibration naturelle, du tube de transfert de chaleur respectif (3) permettant de déterminer, pendant le fonctionnement de l'échangeur de chaleur (1), une épaisseur de paroi de tube du tube de transfert de chaleur respectif (3).

2. Échangeur de chaleur (1) selon la revendication 1, **caractérisé en ce que** le capteur à fibre optique (2) est une fibre optique de mesure (M) qui forme une section de mesure et une fibre optique de référence (R) qui forme une section de référence, la fibre de mesure (M) transmettant les vibrations étant reliée au tube de transfert de chaleur (3), de préférence enroulée autour du tube de transfert de chaleur (3), pour détecter un signal d'interférence formé par une onde électromagnétique guidée le long de la section de mesure et une onde électromagnétique guidée le long de la section de référence à l'aide d'un détecteur (PD) du capteur à fibre optique (2).

3. Échangeur de chaleur (1) selon la revendication 2, **caractérisé en ce que** la fibre de référence (R) est reliée au tube de transfert de chaleur (3) de manière découplée des vibrations, de préférence enroulée autour du tube de transfert de chaleur (3).

4. Échangeur de chaleur (1) selon la revendication 2 ou 3, **caractérisé en ce que** l'échangeur de chaleur (1) présente une chambre à fluide (4) pour recevoir le second fluide (F2), les tubes de transfert de chaleur (3) s'étendant à l'intérieur de la chambre à fluide (4) et la fibre de mesure (M) à l'intérieur de la chambre à fluide (4) étant reliée de manière à transmettre des vibrations au tube de transfert de chaleur (3), un détecteur (PD) du capteur à fibre optique (2) servant à détecter le signal parasite à l'extérieur de la chambre à fluide (4) étant disposé à l'extérieur de la chambre à fluide (4).

5. Échangeur de chaleur (1) selon l'une des revendications 2 à 4, **caractérisé en ce que** le capteur à fibre optique (2) présente une source d'émission électromagnétique (L), de préférence un laser, pour générer des ondes électromagnétiques, la source d'émission (L) étant couplée avec la fibre de mesure (M) et la fibre de référence (R) pour incorporer des ondes électromagnétiques dans la fibre de mesure (M) et la fibre de référence (R).

6. Échangeur de chaleur (1) selon l'une quelconque des revendications 2 à 5, **caractérisé en ce que** la fibre de mesure (M) et la fibre de référence (R) comportent chacune un élément réfléchissant ou sont reliées à un tel élément réfléchissant pour réfléchir une onde électromagnétique conduite le long de la section de mesure ou de la section de référence au moyen de l'élément réfléchissant.

7. Échangeur de chaleur (1) selon l'une quelconque des revendications 2 à 6, **caractérisé en ce que** la fibre de mesure (M) et la fibre de référence (R) sont couplées ensemble à un point de couplage pour former un signal d'interférence avec une onde électromagnétique transmise le long de la section de mesure et une onde électromagnétique transmise le long de la section de référence.

8. Échangeur de chaleur (1) selon l'une quelconque des revendications 2 à 7, **caractérisé en ce que** le capteur à fibre optique (2) présente un coupleur optique (19) avec plusieurs lignes d'entrée et plusieurs lignes de sortie, les lignes d'entrée et les lignes de sortie étant reliées entre elles pour la transmission répartie d'ondes électromagnétiques, la source d'émission électromagnétique (L) étant connectée à l'une des lignes d'entrée et la fibre de mesure (M) et la fibre de référence (R) étant chacune connectées à l'une des lignes de sortie, de manière à ce qu'une onde électromagnétique introduite par la source d'émission (L) dans la ligne d'entrée soit conduite par l'intermédiaire des lignes de sortie dans la fibre de mesure (M) et la fibre de référence (R).

9. Échangeur de chaleur (1) selon la revendication 8, **caractérisé en ce qu'**un détecteur (PD), de préférence formé d'une photodiode, est relié respectivement à une ou plusieurs des lignes d'entrée afin de détecter une onde électromagnétique respectivement réfléchie en retour le long de la fibre de mesure (M) et de la fibre de référence (R) dans la ligne de sortie au niveau des lignes d'entrée avec le détecteur respectif (PD) sous forme de signal d'interférence.

10. Échangeur de chaleur (1) selon l'une quelconque des revendications 2 à 9, **caractérisé en ce que** la fibre de mesure (M) traverse au moins partiellement le second fluide (F2) lors du fonctionnement de l'échangeur de chaleur (1), le capteur à fibre optique (2) étant réalisé de manière à ce que la fibre de mesure (M) ou la fibre de référence (R) puisse être utilisée à une pression de service supérieure à 30 bars et/ou à une température de service supérieure à 80 °C.

11. Échangeur de chaleur (1) selon l'une quelconque des revendications 2 à 10, **caractérisé en ce que** la fibre de mesure (M) ou la fibre de référence (R), aux fins d'une protection contre une pression ambiante et/ou une température ambiante, s'étend au moins partiellement à l'intérieur d'une enveloppe de protection, de préférence en métal ou en polyimide.

12. Procédé pour faire fonctionner un échangeur de chaleur (1), en particulier un échangeur de chaleur (1) selon l'une quelconque des revendications 1 à 11, **caractérisé en ce que**, sur un ou plusieurs tubes de transfert de chaleur (3) avec lesquels un premier fluide (F1) est transporté, pour transférer de la chaleur par l'intermédiaire des tubes de transfert de chaleur (3) entre le premier fluide (F1) et un second fluide (F2), un capteur à fibre optique (2) est disposé à chaque fois, une vibration élastique, en particulier une vibration naturelle, du tube de transfert de chaleur (3) respectif étant déterminée par interférométrie avec le capteur à fibre optique (2) pendant le fonctionnement de l'échangeur de chaleur (1) afin de déterminer une épaisseur de paroi de tube de transfert de chaleur (3) respectif pendant le fonctionnement de l'échangeur de chaleur (1).

13. Procédé selon la revendication 12, **caractérisé en ce que** le capteur à fibre optique (2) présente une fibre optique de mesure (M) qui forme une section de mesure et une fibre optique de référence (R) qui forme une section de référence, la fibre optique de mesure (M) étant reliée au tube de transfert de chaleur (3) de manière à transmettre les vibrations, sachant que, lors de la détection d'un signal d'interférence d'une onde électromagnétique guidée le long de la section de mesure et d'une onde électromagnétique guidée le long de la section de référence, une vibration élastique du tube de transfert de chaleur (3) est déterminée.

14. Procédé selon la revendication 13, **caractérisé en ce que** l'onde électromagnétique guidée par la fibre de mesure (M) ou la fibre de référence (R) présente une longueur de cohérence supérieure à 2 mm, en particulier supérieure à 5 mm.

15. Procédé selon l'une quelconque des revendications 12 à 14, **caractérisé en ce que** Le second fluide (F2) présente une pression supérieure à 30 bars, en particulier entre 30 bars et 200 bars, de préférence d'environ 180 bars, et/ou une température supérieure à 80 °C, en particulier entre 80 °C et 300 °C, de préférence d'environ 230 °C.
